(19) Europäisches Patentamt
European Patent Office
Office européen des brevets

(11) **EP 3 297 340 A2**

(12) **EUROPEAN PATENT APPLICATION**

(43) Date of publication:
**21.03.2018 Bulletin 2018/12**

(51) Int Cl.:
*H04W 52/24* (2009.01)  *H04W 52/36* (2009.01)
*H04W 74/08* (2009.01)  *H04W 84/12* (2009.01)

(21) Application number: **17185014.2**

(22) Date of filing: **04.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.09.2016 US 201615266000**

(71) Applicant: **Kabushiki Kaisha Toshiba
Minato-ku
Tokyo 105-8001 (JP)**

(72) Inventors:
• **KULKARNI, Parag
Bristol, BS1 4ND (GB)**
• **AOKI, Tsuguhide
Tokyo, 105-8001 (JP)**
• **MADHAVAN, Narendar
Tokyo, 105-8001 (JP)**

(74) Representative: **Moreland, David
Marks & Clerk LLP
Aurora
120 Bothwell Street
Glasgow G2 7JS (GB)**

(54) **METHOD AND DEVICE FOR MANAGING WIRELESS COMMUNICATION WITHIN A NETWORK**

(57) There is provided a device and method for managing wireless communication over a transmission channel within a network. A set of received signal strength values is obtained for signals transmitted over the transmission channel within the network. A lowest received signal strength value of the set of received signal strength values is determined. A maximum limit by which a transmission power for the transmission channel may be reduced from a predetermined transmission power is determined, the maximum limit being based on the lowest received signal strength value.

**EP 3 297 340 A2**

Fig. 7

**Description**

TECHNICAL FIELD

The present disclosure relates to devices and methods for managing wireless communication within a network.

BACKGROUND

Wireless Local Area Network (WLAN) technology has significantly matured over the last decade and while it continues to function well, there are scenarios where it struggles to deliver acceptable performance for the most basic services. Due to the success of WLAN, wireless networks are increasingly getting denser in order to meet huge traffic demand. It has been challenging for current wireless networks to tackle some problems due to the high density, notably, the overlapping basic service set (OBSS) problem.

Generally, wireless networks comprise a wireless access point (AP) which allows wireless stations (STAs) to wirelessly connect to a wired network. A wireless station is a device which has the capability to connect wirelessly to a wireless network, for instance, via the 802.11 wireless protocol. A wireless access point (AP) has station functionality but also manages all the distributed stations within a network and is able to connect to a wired network to provide the stations within the wireless network with access to the wired network. Access points and stations are both types of node within the wireless network, in that they are both able to send and receive wireless messages. Accordingly, access points are a type of wireless station.

One of the main causes of wireless performance deterioration is overcrowding of devices in the unlicensed bands where WLANs typically operate. This is particularly a risk in dense deployment environments, such as apartments, conference venues and shopping centres. Increased density increases the likelihood of collision between two wireless transmissions, unless steps are taken to mitigate this likelihood.

One approach to attempt to reduce the possibility of collision is for a station (STA), before using a channel, to sense the channel to determine if the channel is clear to be used. This is often governed by clear channel assessment (CCA) thresholds, parameters used to define the sensitivity of a station to incoming transmission from other STAs. If signals are received that have a received signal strength that is below the CCA thresholds, then the signals are ignored and the station is free to transmit over the channel. Accordingly, the higher the CCA thresholds, the less sensitive the device is to wireless signals. CCA thresholds are applied when the origin of the signal is not known (i.e. it is not known whether the signal originates from within or outside the network).

A further method of preventing clashes between nearby networks assigns a different "colour" to each network. A single network (or cell) is a single basic service set (BSS), comprising at least one access point and one station. Each BSS is assigned a colour which is communicated to the stations in the BSS. When a station or access point in the network transmits, it includes an indicator of the colour of the network. When a station or access point (the receiving device) receives this information, it checks whether the colour indicated in the received data is the same as the colour for the network in which the receiving device is operating. If the signal originates from within the network then the receiving station sets the channel to be BUSY (inhibits transmission) for the duration of the signal.

If the signal originates from outside the network, then the receiving station may implement a threshold (known as the OBSS Preamble Detect (OBSS_PD) threshold) to determine whether to set the channel to BUSY. If the colour of a received transmission is different (i.e. if the signal originates from outside the network), the channel is set to BUSY if the received signal strength is greater than the OBSS_PD threshold. Otherwise, the channel is set to CLEAR and the received signal is ignored. This allows stations and access points to ignore signals from devices outside of their network. In the present application, the threshold set for signals when the origin of the signal is not known is called the CCA threshold, whereas the threshold set for signals from outside the network is called the OBSS_PD threshold.

Dynamic Sensitivity Control is a method for improving spatial reuse. The idea is to turn a deaf ear to transmissions happening in neighbouring cells (termed Overlapping Basic Service Set or OBSS) by increasing the OBSS Preamble Detect (OBSS_PD) threshold. This, however, only addresses the issue of ignoring the existence of OBSS transmissions. It does nothing to limit the impact on neighbouring networks of engaging in a simultaneous parallel transmission (termed Spatial Reuse or SR transmission).

If a node can hear an OBSS transmission, it is also likely that its own transmissions can be heard by the originator of the OBSS transmission. Therefore, to maximise the likelihood of success of both of these transmissions, it is not only necessary for the other node to increase its OBSS_PD threshold to ignore the OBSS transmission, but also reduce its transmit power so that the SR transmission does not cause interference to the OBSS transmission. The power of transmissions by a node is controlled by the Transmit Power Control mechanism. Both the transmit power control (TPC) as well as OBSS_PD may be adapted at the same time by the same margin so as to successfully accomplish spatial reuse.

Accordingly, the decrease in transmit power by "M" can be accompanied by a corresponding increase in OBSS_PD threshold by "M" and vice versa. Having said this, such a reduction in transmit power can result in nodes in the same cell (termed MyBSS) being unable to hear the transmission from the MyBSS node which is reducing its transmit power, as absence of carrier sensing between MyBSS nodes can lead to collisions and unfair medium access.

Accordingly, there is a need for an improved means of managing wireless transmissions within a network that avoids interference with neighbouring networks but maintains performance within the network.

BRIEF DESCRIPTION OF THE DRAWINGS

Arrangements of the present invention will be understood and appreciated more fully from the following detailed description, made by way of example only and taken in conjunction with drawings in which:

Figure 1 shows an example topology comprising two networks;
Figure 2 highlights how reduction of transmit power could lead to the hidden terminal problem;
Figure 3 shows a first method of adjusting transmit power according to an arrangement;
Figure 4 shows a further scenario in which the first method is utilised;
Figure 5 shows transmit power advertisement in a spatial reuse transmission according the first method;
Figure 6 shows a first method of assigning a limit at (a) a wireless station and (b) a wireless access point;
Figure 7 shows a method for varying a transmit power and clear channel assessment threshold according to an arrangement;
Figure 8 shows an arrangement where the access point computes and advertises limits for stations in its network;
Figure 9 shows an arrangement where the lowest limit value is applied to all stations in the network and each station advertises whether it has applied the lowest limit value using a single bit identifier;
Figure 10 shows a second method of adjusting transmit power according to an arrangement;
Figure 11 highlights how reduction of transmit power could lead to the hidden terminal problem;
Figure 12 shows a second method of determining a limit according to an arrangement;
Figure 13 shows the calculation of limits according to the second method;
Figure 14 shows the advertisement of limits according to the second method;
Figure 15 shows a first scenario for setting the OBSS_PD threshold according to the second method;
Figure 16 shows a further scenario for setting the OBSS_PD threshold according to the second method;
Figure 17 shows a third method of adjusting transmit power according to an arrangement;
Figure 18 shows the sequence for nodes determining their respective limits according to the third method;
Figure 19 shows an arrangement according to the third method in which a node does not engage in a spatial reuse transmission;
Figure 20 shows an arrangement according to the third method in which a node engages in a spatial reuse transmission;
Figure 21 shows the third method according to an arrangement; and
Figure 22 shows (a) a wireless station, and (b) wireless access point according to an arrangement.

DETAILED DESCRIPTION

According to a first arrangement there is provided a device for managing wireless communication over a transmission channel within a network. The device comprises a controller configured to obtain a set of received signal strength values for signals transmitted over the transmission channel within the network, determine a lowest received signal strength value of the set of received signal strength values, and determine a maximum limit by which a transmission power for the transmission channel may be reduced from a predetermined transmission power, the maximum limit being based on the lowest received signal strength value.

By setting a maximum limit by which the transmission power may be reduced, this arrangement ensures that the transmission power is not reduced too far resulting in stations within the network being unable to overhear transmissions over the channel. This therefore helps to avoid collisions within the network.

This arrangement may relate to a device that calculates one or more maximum limits for stations within the network and/or a station that may calculate a maximum limit for itself. Accordingly, the device may be a station in the network, an access point in the network or a backend device that can communication with stations in the network and/or the access point.

Different limits and transmission powers may be calculated for different transmission channels based on signals received over the respective channels. Each received signal strength value may be any indication of the strength or power of a received signal, for instance a received signal strength indicator (RSSI) or received channel power indicator (RCPI). The signals transmitted within network are signals transmitted between stations in the network. The predetermined transmission power may be a default and/or maximum transmission power. The maximum limit can be considered to define a minimum transmission power (i.e. the default transmission power reduced by the maximum limit).

In a further arrangement, the maximum limit is determined to be the difference between the lowest received signal strength value and a predefined threshold. The predefined threshold may be a default Overlapping Basic Service Set Preamble Detect (OBSS_PD) threshold. In one arrangement, the default threshold is the smallest detectable signal, e.g. -82 dBm.

According to a further arrangement, the device further comprises a wireless interface for communicating wirelessly over the transmission channel with wireless stations in the network. Obtaining a set of received signal strength values comprises receiving over the transmission channel, via the wireless interface, signals from a first set of stations within the network, and determining, for each signal, a corresponding received signal strength value. The device can therefore be a station (or access point) in the network. The device may calculate its own maximum limit or calculate a maximum limit for use by another station in the network. Received signals need not be directed towards device (i.e. transmissions between other stations in the network could be overheard).

According to a further arrangement, the controller is further configured to receive over the transmission channel, via the wireless interface, a first signal from outside of the network, determine a first received signal strength value corresponding to the first signal received from outside of the network, determine whether the first received signal strength value is greater than a first threshold, and, in response to the first received signal strength value not being greater than the first threshold, permit the wireless interface to transmit at the transmission power to a station in the network.

The first threshold may be an OBSS_PD threshold. Accordingly, the device may permit spatial reuse transmission when a signal from outside the network has been received with a received signal strength that is less than or equal to the first threshold. This permits transmission at same time as receipt of the first signal. Permitting the wireless interface to transmit may comprise determining that the transmission channel is clear. The wireless interface need not actually transmit (as no packets may be queued for transmission). When permitting spatial reuse transmission, the device may still need to check that channel is clear from signals transmitted within the network. The device may determine whether the first signal is from outside of the network based on a basic service set (BSS) colour or MAC address contained in the signal.

According to a further arrangement the controller is further configured to, in response to the first received signal strength value being greater than the first threshold, determine whether the maximum limit is greater than the difference between the first received signal strength value and a predefined threshold and, in response to the maximum limit being greater than the difference: increase the first threshold so that the first threshold is greater than the first received signal strength value and so that the first threshold is greater than the predefined threshold by a first amount; and set the transmission power to be less than the predetermined transmission power by the first amount. The controller is further configured to permit the wireless interface to transmit at the transmission power to a station in the network.

Accordingly, the device allows spatial reuse transmission at a decreased transmit power (to avoid interfering with communication outside of the network) if the transmit power is able to be reduced within the maximum limit. The first threshold is increased by a corresponding amount to filter out the first signal. This ensures that spatial reuse transmissions take place (to improve the efficiency of the network) whilst avoiding reducing the transmit power too far, resulting in increased collisions within the network. The first threshold may be an OBSS_PD threshold and the predefined first threshold may be a default OBSS_PD threshold, e.g. -82 dBm. The first amount may be any value that larger than the difference but smaller than or equal to the maximum limit.

In alternative arrangements, the maximum limit calculated by the device is provided to other stations in the network, and the device applies a maximum limit calculated by other stations in the network.

According to a further arrangement the controller is further configured to, in response to the maximum limit not being greater than the difference, inhibit transmissions from the device over the channel via the wireless interface for the duration of the first signal. Accordingly, the channel may be set to BUSY if it is not possible to increase the first threshold to filter out the first signal (and decrease the transit power by a corresponding amount) without exceeding the maximum limit.

According to a further arrangement the controller is configured to include an indication of the transmission power in the transmission, wherein the indication comprises one or more of a spatial reuse identifier, a spatial reuse power value, the transmission power, the predefined transmission power and the first amount. This allows other devices to estimate what the transmission power of the signal would have been if it was not reduced. This allows stations within the network to more accurately monitor transmissions within the network. The indication may be included in a header of the transmission. Both the first amount and the predefined transmission power (e.g. default transmission power) could be provided to allow the transmission power to be determined. A spatial reuse identifier could be any indication that the transmission is a spatial reuse transmission.

In a further arrangement, determining, for each signal, a corresponding received signal strength value comprises: determining whether the signal includes an indication of a second amount by which the transmit power for the signal has been reduced; in response to determining that the signal includes an indication of the second amount, determining a predicted received signal strength value based on the received signal strength of the signal and the second amount and setting the corresponding received signal strength value to equal the predicted received signal strength value; and, in response to determining that the signal does not include an indication of the second amount, setting the corresponding received signal strength value to equal the received signal strength. Accordingly, the device may estimate what the transmit power for a spatial reuse transmission would have been if it had not been reduced to ensure that accurate received signal strength values are collected for use in determining the maximum limit.

According to a further arrangement, each signal includes a corresponding spatial reuse power value and the device further comprises memory. Obtaining a set of received signal strength values comprises: storing in the memory, for each of the first set of stations, a respective spatial reuse power value and a respective received signal strength value; receiving over the channel, via the wireless interface, a further signal from one of the first set of stations, the further signal comprising a further spatial reuse power value; determining a further received signal strength value for the further signal; determining whether the further spatial reuse power value is greater than the respective spatial reuse power value stored in the memory and/or whether the further received signal strength value is greater than the respective received signal strength value stored in the memory; and in response to determining that the further spatial reuse power value is greater than the respective spatial reuse power value stored in the memory and/or determining that the further received signal strength value is greater than the respective received signal strength value stored in the memory, storing the further spatial reuse power value and the further received signal strength power value in the memory. Determining a lowest received signal strength value of the set of received signal strength values comprises determining the lowest received signal strength value from the received signal strength values stored in the memory for the first set of stations.

The device may therefore determine whether the transmit power for a station has been reduced based on SRP values or received signal strength values to ensure that accurate received signal strength values are collected. Further SRP and received signal strength values may be stored in place of the previous values for that station (i.e. previous values may be deleted). The values may be stored in a table.

According to a further arrangement, the controller is configured to: obtain, for each of a plurality of stations in the network, a further maximum limit calculated based on signals received by the respective station; and set the maximum limit for a first station to equal the smallest of the further maximum limits for the plurality of stations. The maximum limit for the first station may therefore be set based on limits calculated by other stations within the network. The first station may be the device, or may be another station in the network. In one arrangement, the first station is one of the plurality of stations. This provides a more conservative means of setting the limit. In a further arrangement, the first station is not one of the plurality of stations. The limit for the first station may be based on smallest of the further maximum limits calculated for all of the stations in the network

Obtaining the further maximum limits could mean determining (e.g. using received signal strength values) or receiving the further maximum signal from one or more devices that calculated the further maximum limits.

In a further arrangement the device further comprises a wireless interface for communicating wirelessly over the transmission channel with the plurality of stations in the network. The controller is further configured to send, via the wireless interface, a signal indicating the maximum limit to the plurality of stations in the network. Obtaining, for each of a plurality of stations in the network, a further maximum limit comprises receiving, via the wireless interface from each of the plurality of stations in the network, a corresponding maximum limit calculated based on the smallest received signal strength of signals received by the respective station. The controller is further configured to select the smallest of the further maximum limits and set, as the maximum limit for the device, the smallest of the further maximum limits.

According to a further arrangement, obtaining a set of received signal strength values comprises receiving, from a wireless station in the network, a first set of received signal strength values corresponding to signals received by the wireless station over the transmission channel from other wireless stations in the network. The device is further configured to send the maximum limit to the wireless station. The device may therefore determine the maximum limit(s) for one or more stations in the network and send the maximum limit(s) for application at the station(s). The device may be an access point, a station in the network or a computer that is communicatively connected to the network (e.g. via the access point). Sending could involve advertising the maximum limit(s) in a beacon/multicast message.

According to a further arrangement the set of received signal strength values comprises a first set of received signal strength values corresponding to signals received by a first wireless station over the transmission channel from other wireless stations in the network. Determining the lowest received signal strength value comprises determining the lowest received signal strength value of the first set of received signal strength values. Alternatively, obtaining a set of received signal strength values further could comprise receiving, from one or more further wireless stations, a second set of received signal strength values corresponding to signals received over the transmission channel by the one or more further wireless stations from other wireless stations in the network, and determining the lowest received signal strength value could comprise determining the lowest received signal strength value from the first and second sets.

The maximum limit may therefore be set based on lowest received signal strength value for a specific station or based on lowest received signal strength value recorded by multiple stations (e.g. across the whole network). The first wireless station may be the device or may be another device.

According to a second aspect of the invention there is provided a device for managing wireless communication over a transmission channel within a network, the device comprising a wireless interface and a controller. The controller is configured to: receive over the transmission channel, via the wireless interface, a first signal from outside of the network; determine a first received signal strength value corresponding to the signal received from outside of the network; and determine whether the first received signal strength value is greater than a first threshold. The controller is further configured to, in response to the first received signal strength value being greater than the first threshold: determine whether a maximum limit is greater than the difference between the first received signal strength value and a predefined threshold. The controller is further configured to, in response to the maximum limit being greater than the difference: increase the first threshold so that the first threshold is greater than the first received signal strength value and so that the first threshold is greater than the predefined threshold by a first amount; set a transmission power for the transmission channel to be less than the predetermined transmission power by the first amount; and permit the wireless interface to transmit over the transmission channel at the transmission power to a station in the network.

Accordingly, a station may increase its first threshold and decrease its transmit power within the scope allowed by the maximum limit.

According to a further arrangement the controller is configured to: in response to the first received signal strength value not being greater than the first threshold, permit the wireless interface to transmit over the transmission channel at the transmission power to a station in the network; and in response to the maximum limit not being greater than the difference, inhibit transmissions from the device via the wireless interface over the transmission channel for the duration of the first signal.

According to a further arrangement, the controller is configured to receive over the transmission channel, via the wireless interface, signals from wireless stations within the network; determine a set of received signal strength values corresponding to the received signals; transmit to an access point in the network, via the wireless interface, the set of received signal strength values or a lowest received signal strength value of the set of received signal strength values; and receive from the access point, via the wireless interface, a maximum limit by which a transmission power for the transmission channel may be reduced from a predetermined transmission power, the limit being based on the lowest received signal strength value of the set of received signal strength values.

The maximum limit may therefore be calculated by an access point (or a device communicatively connected to the access point) and provided to the station based on received signal strength values provided by the station.

According to a third aspect of the invention there is provided a method for managing wireless communication over a transmission channel within a network, the method comprising, in a device comprising a controller: obtaining a set of received signal strength values for signals transmitted over the transmission channel within the network; determining a lowest received signal strength value of the set of received signal strength values; and, determining a maximum limit by which a transmission power for the transmission channel may be reduced from a predetermined transmission power, the maximum limit being based on the lowest received signal strength value.

According to a further arrangement, the maximum limit is determined to be the difference between the lowest received signal strength value and a predefined threshold.

According to a further arrangement, the device further comprises a wireless interface for communicating wirelessly with wireless stations in the network. Obtaining a set of received signal strength values comprises: receiving, via the wireless interface, signals from a first set of stations within the network; and determining, for each signal, a corresponding received signal strength value.

According to a further arrangement, the method further comprises: receiving, via the wireless interface, a first signal from outside of the network; determining a first received signal strength value corresponding to the signal received from outside of the network; determining whether the first received signal strength value is greater than a first threshold; in response to the first received signal strength value not being greater than the first threshold, permitting the wireless interface to transmit at the transmission power to a station in the network.

The method may further comprises, in response to the first received signal strength value being greater than the first threshold: determining whether the maximum limit is greater than the difference between the first received signal strength value and a predefined threshold; in response to the maximum limit being greater than the difference: increasing the first threshold so that the first threshold is greater than the first received signal strength value and so that the first threshold is greater than the predefined threshold by a first amount; setting the transmission power to be less than the predetermined transmission power by the first amount; and permitting the wireless interface to transmit at the transmission power to a station in the network.

The method may further comprise, in response to the maximum limit not being greater than the difference, inhibiting transmissions from the device via the wireless interface for the duration of the first signal.

According to a further arrangement, an indication of the transmission power is included in the transmission, wherein the indication comprises one or more of a spatial reuse power value, the transmission power, the predefined transmission power and the first amount.

According to a further arrangement, determining, for each signal, a corresponding received signal strength value comprises: determining whether the signal includes an indication of a second amount by which the transmit power for the signal has been reduced; in response to determining that the signal includes an indication of the second amount, determining a predicted received signal strength value based on the received signal strength of the signal and the second amount and setting the corresponding received signal strength value to equal the predicted received signal strength value; and, in response to determining that the signal does not include an indication of the second amount, setting the corresponding received signal strength value to equal the received signal strength.

According to a further arrangement, each signal includes a corresponding spatial reuse power value; the device further comprises memory; obtaining a set of received signal strength values comprises: storing in the memory, for each of the first set of stations, a respective spatial reuse power value and a respective received signal strength value; receiving a further signal from one of the first set of stations, the further signal comprising a further spatial reuse power value; determining a further received signal strength value for the further signal; determining whether the further spatial reuse power value is greater than the respective spatial reuse power value stored in the memory and/or whether the further received signal strength value is greater than the respective received signal strength value stored in the memory; and in response to determining that the further spatial reuse power value is greater than the respective spatial reuse power value stored in the memory and/or determining that the further received signal strength value is greater than the respective received signal strength value stored in the memory, storing the further spatial reuse power value and the further received signal strength power value in the memory. Determining a lowest received signal strength value of the set of received signal strength values comprises determining the lowest received signal strength value from the received signal strength values stored in the memory for the first set of stations.

According to a further arrangement the method further comprises: obtaining, for each of a plurality of stations in the network, a further maximum limit calculated based on signals received by the respective station; and setting the maximum limit for the device to equal the smallest of the further maximum limits for the stations.

According to a further arrangement: obtaining a set of received signal strength values comprises receiving, from a wireless station in the network, a first set of received signal strength values corresponding to signals received by the wireless station from other wireless stations in the network; and the method further comprises sending the maximum limit to the wireless station.

According to a further arrangement, the set of received signal strength values comprises a first set of received signal strength values corresponding to signals received by a first wireless station from other wireless stations in the network. Determining the lowest received signal strength value comprises determining the lowest received signal strength value of the first set of received signal strength values; or obtaining a set of received signal strength values further comprises receiving, from one or more further wireless stations, a second set of received signal strength values corresponding to signals received by the one or more further wireless stations from other wireless stations in the network, and determining the lowest received signal strength value comprises determining the lowest received signal strength value from the first and second sets.

According to a fourth aspect of the invention there is provided a method for managing wireless communication over a transmission channel within a network, the method comprising, in a device comprising a wireless interface and a controller: receiving over the transmission channel, via the wireless interface, a first signal from outside of the network; determining a first received signal strength value corresponding to the signal received from outside of the network; determining whether the first received signal strength value is greater than a first threshold; and in response to the first received signal strength value being greater than the first threshold: determining whether a maximum limit is greater than the difference between the first received signal strength value and a predefined threshold; and in response to the maximum limit being greater than the difference: increasing the first threshold so that the first threshold is greater than the first received signal strength value and so that the first threshold is greater than the predefined threshold by a first amount; setting a transmission power for the transmission channel to be less than the predetermined transmission power by the first amount; and permitting the wireless interface to transmit over the transmission channel at the transmission power to a station in the network.

According to a further arrangement the method further comprises: in response to the first received signal strength value not being greater than the first threshold, permitting the wireless interface to transmit over the transmission channel at the transmission power to a station in the network; and in response to the maximum limit not being greater than the difference, inhibiting transmissions from the device via the wireless interface over the transmission channel for the duration of the first signal.

According to a further arrangement the method further comprises: receiving, via the wireless interface, signals from wireless stations within the network; determining a set of received signal strength values corresponding to the received signals; transmitting to an access point in the network, via the wireless interface, the set of received signal strength values or a lowest received signal strength value of the set of received signal strength values; and receiving from the access point, via the wireless interface, a maximum limit by which a transmission power for the wireless interface may be reduced from a predetermined transmission power, the limit being based on the lowest received signal strength value of the set of received signal strength values.

According to a further arrangement there is provided a computer readable medium comprising instructions for causing a computer to perform any of the above methods.

It will be readily apparent that any of the above arrangements can be combined in any combination to implement the teaching described herein.

As discussed above, if a node reduces its transmit power (simultaneously increasing its OBSS_PD threshold by the same margin), then it will end up sending weaker signals within the network. This can lead to a problem with hidden nodes, i.e. other nodes in the network being unable to hear the node which has reduced its transmit power. As these hidden nodes cannot hear the node, they may transmit at the same time as the node, resulting in collisions. There is therefore a clear need to ensure that the reduction in transmit power does not give rise to hidden nodes and therefore a reduction in network performance.

The methods described herein solve the above problem in a practical manner, in that they do not make any assumptions about the topology and node distribution and are simple from an implementation perspective.

Arrangements provide a method to calculate a limit beyond which transmit power should not be reduced. This prevents the nodes from reducing the transmit power too far and becoming hidden from other MyBSS nodes in the network. There are several ways in which this could be practically deployed.

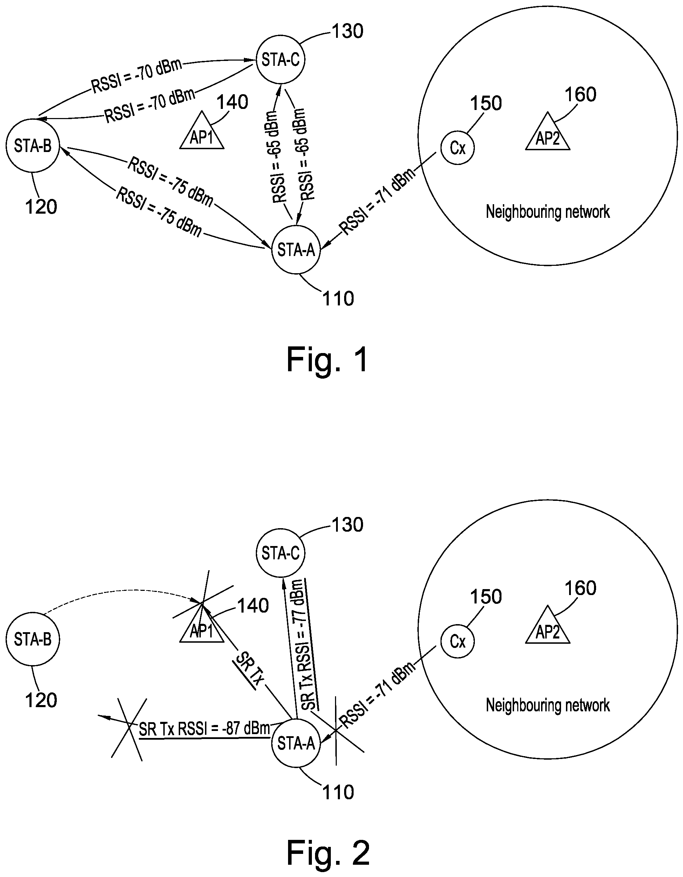

Method 1 relies on the assumption of channel reciprocity and assumes all nodes use the same transmit power. As shown in Figures 1-7, this leads to a very simple implementation. On the other hand, Method 2 does not make any assumptions about channel reciprocity and also does not assume that all nodes use the same reference transmit power values (e.g. it will be appreciated that different devices such as mobile phones and laptops may tend to use different reference transmit power values). Whilst the above two methods require additional signalling between the network nodes, a complementary approach in Method 3 is proposed which does not require any additional signalling between the network nodes.

**Method 1:**

In this method, each STA records the received signal strength indicator (RSSI) of all MyBSS nodes that it can hear and stores the least of all these values. There are different ways in which it can be identified whether a packet belongs to the network (MyBSS) of the recipient node such as:

1) use of BSS colouring whereby the packet belongs to the network if the colour in the packet header matches the colour used by the recipient of the packet; and/or

2) examining the MAC address fields in the packet header whereby the address of the serving access point (AP) matches with that of the AP serving the recipient of this packet.

The first implementation above is more likely to be supported by devices supporting upcoming standards (such as 11ax) whereas the second implementation is more likely to be in use for packets arriving from legacy devices which may not have support for BSS colouring (e.g. if no colour information exists in the header, the MAC address could be examined). Accordingly, arrangements function effectively even if there are legacy nodes in the network operating alongside those supporting the proposed method.

Subtracting the default OBSS_PD threshold (-82dBm) from the smallest RSSI value detected yields the limit by which transmit power can be reduced from the reference power. The logic behind such a limit calculation is that even if a station were to reduce its transmit power by this limit to engage in an SR transmission, it will still continue to be heard by other MyBSS nodes (which could originally hear this station when transmitting at its reference power). This is because the default OBSS_PD threshold is the lowest signal strength that can be detected by the nodes in the network.

When a station hears an OBSS transmission, all it needs to do is check whether reducing the transmit power by the limit will lead to a threshold that is greater than the RSSI of the OBSS transmission. If so, the node can reduce its transmit power at the same time increasing its OBSS_PD threshold by the same amount and engage in a spatial reuse transmission. However, if this is not the case, the station should simply not engage in a spatial reuse transmission and wait for the OBSS transmission to complete. This avoids the transmit power being reduced too far, resulting in hidden nodes.

Figure 1 shows an example topology comprising two networks. Three stations (STA-A 110, STA-B 120 and STA-C 130) are connected to a first access point (AP1) 140 and a further station (Cx) 150 is connected to a neighbouring access point (AP2) 160. All stations are assumed to be using the same reference transmit power (15 dBm) and all access points are assumed to be using the same reference transmit power (20 dBm).

Directional arrows show the RSSI with which an STA can hear other STAs. Even though arrows are not shown between the AP and STAs in the same network, it is assumed that each STA can hear the AP and vice versa. The RSSI for signals between STA-A 110 and STA-B 120 is -75 dBm. The RSSI for signals between STA-B 120 and STA-C 130 is -70 dBm. The RSSI for signals between STA-A 110 and STA-C 130 is -65 dBm. STA-A 110 also receives a signal from Cx with an RSSI of -71 dBm.

Figure 2**Error! Reference source not found.** highlights how reduction of transmit power could lead to the hidden terminal problem. In this example, the nodes operate to decrease their transmit (Tx) power with a corresponding increase in OBSS_PD threshold (or vice versa) as discussed above. They implement a CCA threshold, which is independent of the OBSS_PD threshold, to determine when the channel is clear from signals when they are unable to determine whether the signals originate from within the network.

In the present case, the CCA threshold has a default value of -82 dBm. When a node receives a signal and is unable to determine whether the signal originates from within the network (e.g. the signal doesn't include any BSS colour) then the node checks the received signal strength against the CCA threshold. If dynamic sensitivity control (DSC) is implemented, the CCA threshold may have been increased from its default level. If the RSSI of the signal is greater than or equal to the CCA threshold then the channel is set to BUSY. Otherwise, the channel will be set to CLEAR and transmissions over the channel will be allowed.

When a signal from within the network is received, the nodes will set the channel to BUSY regardless of the strength of the received signal. Accordingly, no check against a CCA or OBSS_PD threshold is required. As discussed herein, the OBSS_PD threshold is applied to signals received from outside of the network. In Figure 2, in order to block out the -71 dBm signals from the Cx node 150, STA-A 110 increases its OBSS_PD threshold from -82 dBm to -70 dBm (i.e. to 1 dBm higher than the RSSI of the signals from the CX node 150). This corresponds to an increase from the default OBSS_PD threshold of 12 dBm. Accordingly, STA-A 110 implements a corresponding 12 dBm decrease to the transmit power to engage in a spatial reuse (SR) transmission without affecting the OBSS transmission.

The unintended consequence of the above scenario is that STA-B 120 may not hear STA-A 110 anymore and may therefore transmit at the same time as STA-A 110, causing collisions.. This is because the RSSI of signals received from STA-A 110 is - 87 dBm (lower than the CCA threshold of -82 dBm). On the other hand, STA-B 120 will not have decreased its transmission power by as much, as it is further away from Cx 150, and therefore signals from STA-B will still be detected by STA-A 110.

If STA-A 110 goes ahead with the SR transmission to AP1 140, it may be likely that, since STA-B 120 cannot carrier sense STA-A 110, STA-B 120 may also engage in a transmission with AP1 140 potentially leading to a collision at AP1 140.

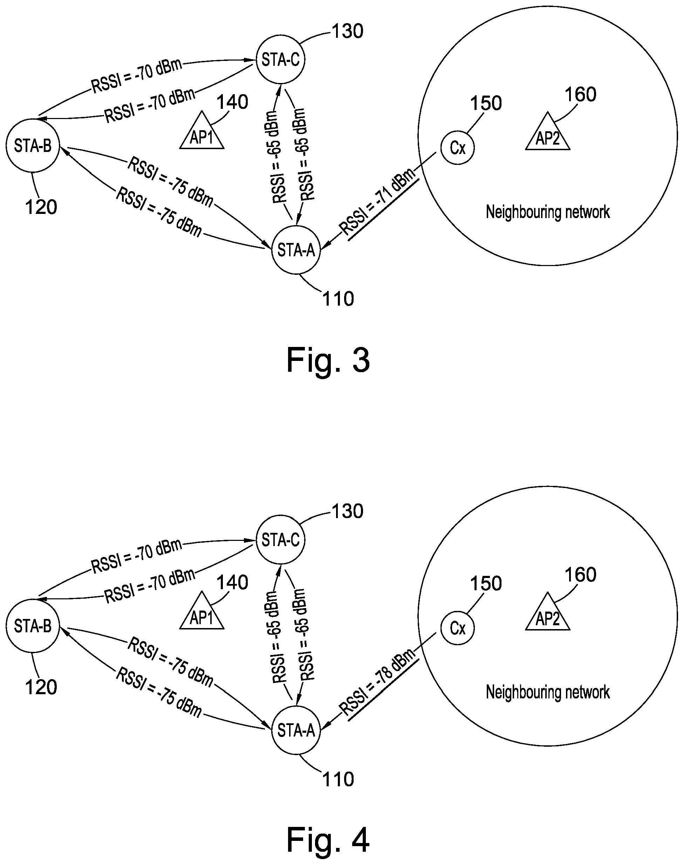

Accordingly, adjusting the transmit power without any limits can result in increased collisions at access points, reducing network efficiency and fairness. Figures 3 and 4 illustrate a solution to the problem.

Figure 3 shows a first method of adjusting transmit power according to an arrangement. As discussed above, each station records the smallest RSSI of the signals received from nodes within its own network (smallest MyBSS RSSI from MyBSS nodes).

As shown in Figure 3, if the least MyBSS RSSI at an STA is lower than the strength of the OBSS transmission, the STA should not engage in an SR transmission. The signal with the lowest RSSI received by STA-A 110 from the nodes in its network is the signal from STA-B 120 which has an RSSI of -75 dBm. The RSSI of the OBSS transmission from Cx 150 is -71 dBm. As the lowest MyBSS RSSI at STA-A is less than the RSSI of the OBSS transmission, STA-A 110 will not engage in an SR transmission. This avoids the risk of collisions at the access point 140 caused by STA-A 110 transmitting whilst STA-B 120 is transmitting (as STA-B 120 cannot register the transmissions from STA-A 110 should STA-A 110 be transmitting a signal weaker than -82 dBm, as mentioned above.).

Figure 4 shows a further scenario in which the first method is utilised. In this case, the lowest MyBSS RSSI at STA-A 110 (-75 dBm from STA-B 120) is higher than the OBSS RSSI (-78 dBm from Cx 150). STA-A 110 could therefore increase its OBSS_PD threshold to a maximum of -75 dBm (reduce transmit power by -75-(-82) = 7dBm) and still be heard at other MyBSS nodes.

Having said this, it is not necessary to increase OBSS_PD and decrease the transmit power by the full 7 dBm. This simply sets a limit for any changes in these respective parameters. In the present scenario, the STA-A 110 can engage in ST transmission by increasing its OBSS_PD and decreasing its transmit power by 5dBm (since -77dBm > -78dBm). In other words, SR transmission can be achieved by varying the transmit power by 1 dBm more than the difference between the OBSS RSSI and the default OBSS_PD.

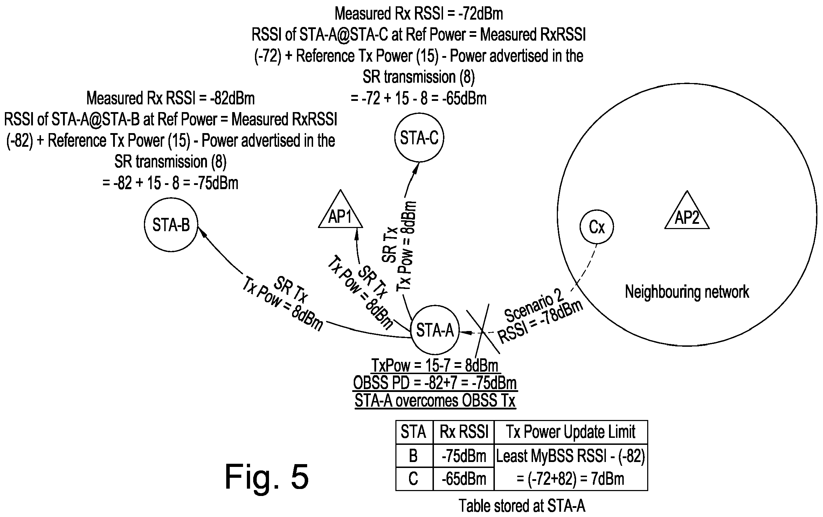

STA-A can therefore engage in an SR transmission by reducing its transmit power by between 5 and 7 dBm; however, when engaging in an SR transmission, the STA should let other MyBSS nodes know that this is the case so that they can take note of the reduced RSSI and extrapolate from it what the real RSSI would be should the STA engaging in an SR transmission were to be transmitting at reference power. This ensures that the other nodes in the system can maintain accurate records of the RSSI values for the nodes in the network. This is accomplished as shown in Figure 5.

Figure 5 shows transmit power advertisement in a spatial reuse transmission according to the first method. This scenario matches that of Figure 4. STA-A stores the received transmit power for each station in its network. STA-A determines the minimum MyBSS RSSI from these RSSI values. In this case, the RSSI from STA-B is -75 dBm and from STA-C is -65 dBm. Accordingly, the least MyBSS RSSI is -75 dBm. The default OBSS_PD of -82 dBm is subtracted from this least MyBSS RSSI to produce a limit of 7 dBm. STA-A therefore decreases its transmit power from the default value, 15 dBm, to 8 dBm and increases its OBSS_PD from the default of -82 dBm to -75 dBm. This blocks out transmissions from Cx (which have an RSSI of -78 dBm), prevents Cx from hearing transmissions from STA-A but also ensures that transmissions from STA-A are heard by the other nodes within the network.

STA-A advertises its reduced transmit power in the header of the SR transmission (SR Tx). Due to the reduced transmit power, STA-B receives a signal with an RSSI of -82 dBm and STA-C receives a signal with an RSSI of -72 dBm. Based on these received RSSIs and the advertised transmit power, each of the remaining stations (STA-B and STA-C) calculates a respective estimate of what the actual RSSI would have been had the transmit power not been reduced. That is, each RSSI adds the reduction onto the measured RSSI. In this case, the stations know the default transmit power (reference Tx = 15 dBm). Accordingly, the estimated RSSI is:

$$Estimated\ RSSI = Measured\ RSSI + Default\ Tx\ Power - Advertised\ Tx\ Power$$

For STA-B this is -82 + 15 - 8 = -75 dBm. For STA-C this is -72 + 15 - 8 = -65 dBm. Assuming all nodes use the same transmit power, an STA needs to only advertise the transmit power in use for the SR transmission. It can signal this in the packet header (e.g. in the MAC header). One way to accomplish this could be to advertise an offset from the reference transmit power (the default power) as shown in Table 1. The method shown in Table 1 in which the offset from the reference power is advertised. This is not the only way that this can be accomplished. The offset or transmit power may be advertised in other ways, such as advertising the actual transmit power value instead of offsets.

Table 1: Signalling transmit power in use during an SR transmission via packet header

| Number of bits required in the packet header | 3 | |
|---|---|---|
| TxPow Adaptation Granularity | 1dBm | |
| TxRefPow | 15 dBm | |
| TxPow | TxRefPow - (PktHdrBitValue * 1) | |
| | | |
| PktHdr Bit Configuration | PktHdrBitValue (Decimal Value) | Tx Pow = TxRefPow - (PktHdrBitValue * 1) |
| 000 | 0 | 15 |
| 001 | 1 | 14 |
| 010 | 2 | 13 |
| 011 | 3 | 12 |
| 100 | 4 | 11 |
| 101 | 5 | 10 |
| 110 | 6 | 9 |
| 111 | 7 | 8 |

As shown in Table 1, the transmit power adaptation granularity (TxPow Adaptation Granularity) is 1 dBm (i.e. the transmit power can be varied by integer $n$ amounts of 1 dBm). The transmit reference power (TxRefPow) is 15 dBm. The packet header includes the amount $n$ that the transmit power (TxPow) is varied (PktHdrBitValue = $n$). The transmit power is therefore TxPow = TxRefPow - PktHdrBitValue. By varying the bit values within the packet header (PktHdr Bit Configuration) different amounts of offset can be conveyed (different decimal values of PktHdrBitValue).

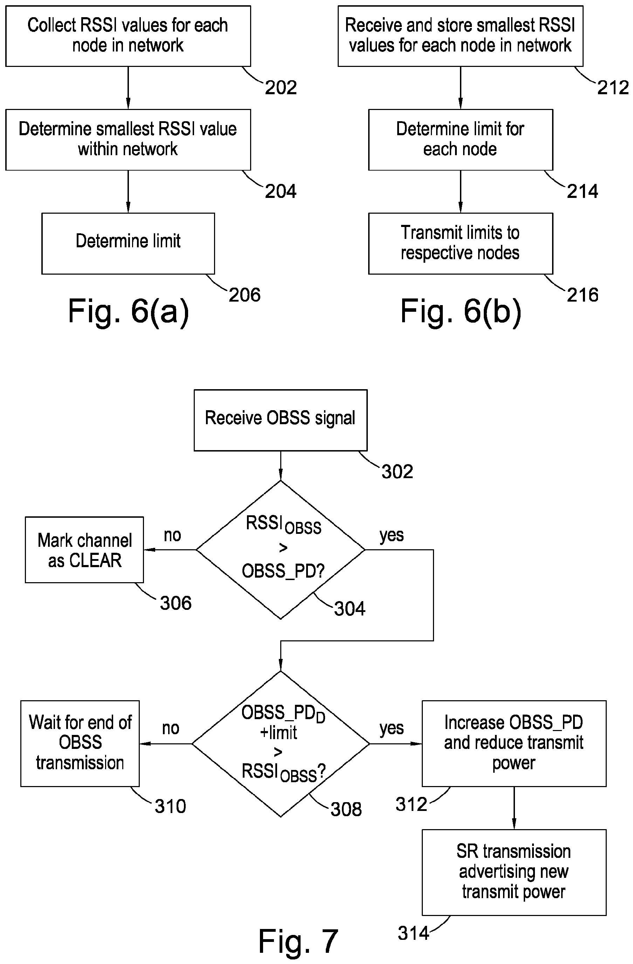

Figure 6 shows a first method of assigning a limit at (a) a wireless station and (b) a wireless access point. Figure 6a shows a distributed method according to an arrangement in which each node (including the access point) can determine its own limit. The node begins by collecting 202 the RSSI value for each node in the network. The node stores the RSSI of signals received from the nodes in the network in a table, associating each RSSI value with the corresponding identifier for the respective node. The RSSI value for each node may be the smallest RSSI value taken from a number of signals received from the node, may be the average RSSI value taken from a number of signals received from the node, or may be the most recent RSSI value for that node, with the table being continuously updated. The node then determines 204 the smallest RSSI value within the network.

The limit is then determined 206 based on the smallest RSSI value within the network. As discussed above, the node subtracts the default OBSS_PD threshold from the smallest RSSI value to determine the limit.

The method described above is distributed in that each node acts independently, i.e. makes its own measurements, takes its own decisions and notifies others of its transmit power when engaging in SR transmissions. Parts of this method could also be centralised. For instance, each STA could report its least MyBSS RSSI to the AP, the AP could compute the limit for each STA and advertise the limits for all STAs in the cell via a beacon frame as shown in Figure 6b.

Figure 6b shows a centralised method of assigning a limit according to an arrangement. The method is implemented by the access point for the network. In this case, each station reports the smallest RSSI value taken from signals from within its network (least MyBSS RSSI) to the access point (AP1).

The access point receives and stores the least MyBSS RSSI for each station 212 and calculates a corresponding transmit power update limit based on the least MyBSS RSS 214. The access point transmits 216 the transmit power update limit for each station to the respective station. The limits for all of the stations may be transmitted to each station via a broadcast message (e.g. a beacon signal). As discussed below, the stations may utilise the limits for other stations in the network when determining their own limit.

Figure 7 shows a method for varying a transmit power and clear channel assessment threshold according to an arrangement. When a signal from outside the network (an OBSS signal) is received 302 the node determines its RSSI ($RSSI_{OBSS}$) and determines 304 whether the RSSI of the signal is greater than the current OBSS_PD threshold. The current OBSS_PD threshold may initially be the default OBSS_PD threshold (e.g. the minimum signal strength detectable by the hardware of the node); however, as discussed herein, the OBSS_PD threshold may have been varied.

If the RSSI of the signal is not greater than the OBSS_PD threshold, then the node determines that the channel is clear and so transmits a spatial reuse transmission at the current transmission power 306, if any transmission is scheduled. Naturally, if no transmission is due to be made, the node simply waits for a transmission to be scheduled.

If the RSSI of the signal is greater than the current OBSS_PD threshold, the node determines whether the limit allows the OBSS_PD threshold to be increased sufficiently to block out the OBSS signal. The node therefore determines 308 whether the limit added to the default OBSS_PD threshold ($OBSS\_PD_D$) is greater than the RSSI of the OBSS signal ($RSSI_{OBSS}$). In other words, the node determines whether the limit is greater than the difference between the RSSI of the OBSS signal and the default OBSS_PD threshold. If not, then spatial reuse transmission is not allowed and the node marks the channel as BUSY and waits 310 for the OBSS transmission to be completed before making any transmission attempts (i.e. the node inhibits transmissions over the channel for the duration of the OBSS signal). If the OBSS_PD threshold can be increased sufficiently to block out the OBSS signal, the OBSS_PD threshold is increased 312 to be greater than $RSSI_{OBSS}$ and the transmit power is decreased by the same amount.

The OBSS_PD threshold may be increased to the $RSSI_{OBSS}$ plus a predefined buffer amount (e.g. 1 dBm). Generally, the OBSS_PD threshold may be increased to any value that is greater than the $RSSI_{OBSS}$ and less than or equal to maximum allowable OBSS_PD threshold. Having said this, specific embodiments always increase the OBSS_PD threshold by the limit to the maximum allowable OBSS_PD threshold. Increasing to the maximum allowable OBSS_PD threshold can help to reduce the signalling requirements as only two options are offered, the default OBSS_PD threshold or the maximum OBSS_PD threshold.

The node then marks the channel as CLEAR and, if a transmission is scheduled, transmits 314 during the OBSS transmission (spatial reuse, SR, transmission). The SR transmission is sent at the reduced (new) transmit power and the new transmit power is advertised in the transmission, e.g. in the header. Advertising the new transmit power allows the other MyBSS nodes in the network to maintain an accurate record of their lowest measured RSSI.

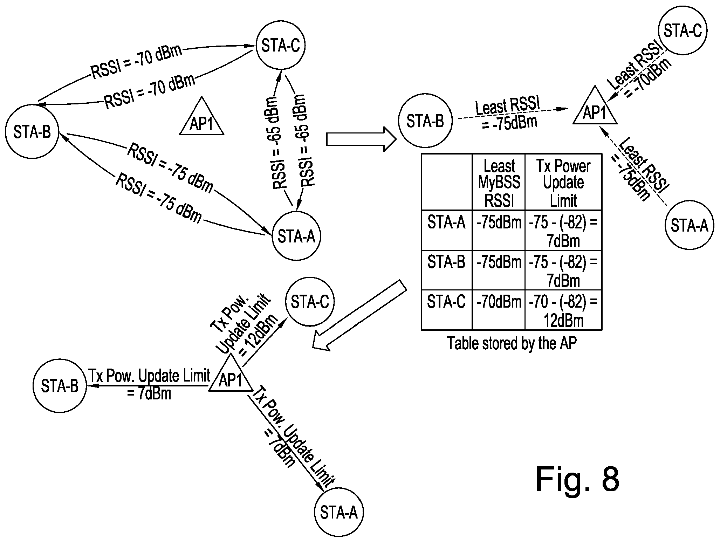

Figure 8 shows an arrangement where the access point computes and advertises limits for stations in its network. The distribution of stations (the strength of the signals) is the same as in Figure 4. The access point determines the limit for each station according to the method of Figure 6b. Each limit may be calculated by the access point by subtracting the default OBSS_PD value from the respective least MyBSS RSSI.

In this case, STA-A, STA-B and STA-C have respective least MyBSS RSSIs of -75 dBm. -75 dBm and -70 dBm respectively. This results in transmit power update limits of 7 dBm, 7dBm and 12 dBm respectively.

In another embodiment, the AP could choose the lowest of all of the calculated limit values and advertise this single lowest value for use by all stations in the network. This reduces the signalling overhead relative to assigning individual limits for each station; however, it may not produce optimum network performance as the nodes would use a conservative value (the smallest of all of the limit values) even though some of them might have otherwise been able to support a higher limit value. The nodes apply the limit in a similar manner to that defined in steps 308-314 of the method of Figure 7.

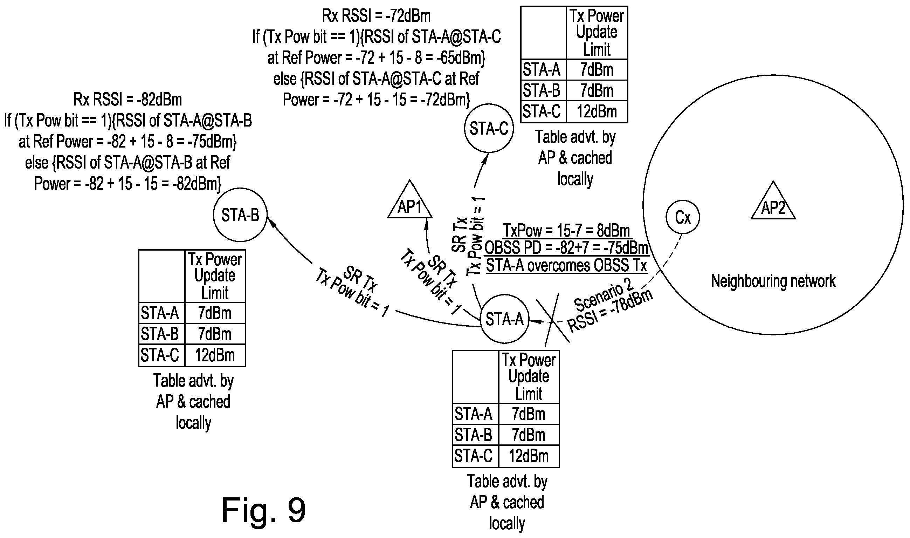

The benefit of this approach is that each STA knows the limit value of other STAs and therefore, provided that each node varies the transmission power by the full limit, there may not be a need for each STA to advertise its transmit power in use when engaging in an SR transmission. All that is required is to advertise a single bit indicating whether this is an SR transmission or not. If a bit value of 1 is advertised, the MyBSS STAs will use the limit value corresponding to the STA engaged in an SR transmission to update the RxRSSI for this STA at Ref Transmit power as shown in Figure 9.

Figure 9 shows an arrangement where the lowest limit value is applied to all stations in the network and each station advertises whether it has applied the lowest limit value using a single bit identifier. This arrangement is the same as that of Figure 8; however, only each node stores the lowest limit values advertised for all nodes in the network and applies the lowest of these limit values as its transmit limit value. In this case, the lowest advertised limit value is 7 dBm. Accordingly, when STA-A receives the OBSS transmission from Cx, it decreases its transmit power from 15 dBm by the lowest advertised limit value (7 dBm) to 8 dBm. STA-A need only transmit a yes or no indication (a "1" or "0" in the packet header) to let the stations know whether it is transmitting using the default or lowered transmit power.

As this single bit identifier is not able to indicate transmit powers that have been decreased by varying amounts, the nodes in the network may only decrease their transmit power by the limit value, even if the nodes do not require the entire margin provided by the limit. For instance, in the scenario shown in Figure 4, STA-A would have to change its OBSS_PD and Tx Power by the limit of 7 dBm, even though a change of 5 dBm would be sufficient to filter out the OBSS transmissions. Nevertheless, in arrangements where the explicit transmit power is advertised (as in Figure 5), the nodes are able to transmit at any transmit power that is less than or equal to the maximum transmit power defined by the limit.

The centralised versions of Figures 8-10 shift the signalling burden from each packet originating from the STA to the management frames advertised by the AP. Recall that the AP now needs to advertise the table comprising the list of associated STAs and the limit value corresponding to each of these (or as mentioned earlier could even advertise the least of these limit values) via the beacon and as the STAs all apply the same lowest limit value, they only need to signal a single bit in each packet. The 1 bit field required for signalling in Figure 9 could be incorporated either in the PHY or the MAC headers. This can be accomplished by either using reserved bits in the existing header or by introducing extensions to the packet header as a part of new standardisation activity.

**Method 2:**

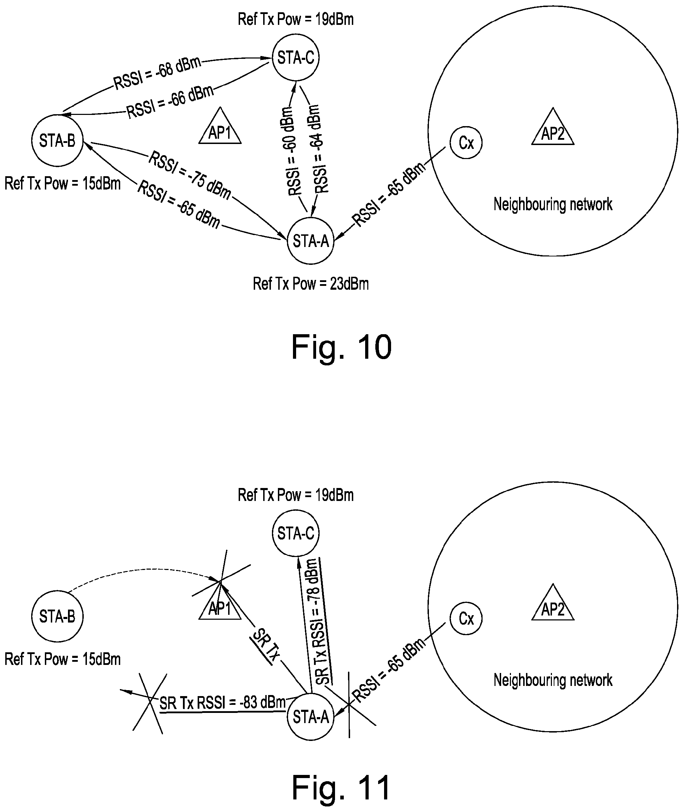

In this method, it is assumed that different types of devices may use different reference transmit power values (default transmit power values) and that channel reciprocity may not hold. Figure 10 depicts the setup used to illustrate this method.

Figure 10 shows a second method of adjusting transmit power according to an arrangement. The setup is similar to that shown for Method 1 except that nodes now hear each other with different signal strengths (see the arrows between the different node pairs). Similar to the case before with Method 1, even though arrows are not shown between the AP and the STAs, it is assumed that each STA can hear the AP and vice versa.

STA-A receives a -75 dBm signal from STA-B and a -64 dBm signal from STA-C. STA-B receives a -65 dBm signal from STA-A and a -66 dBm signal from STA-C. STA-C receives a -60 dBm signal from STA-A and a -68 dBm signal from STA-B.

The problem of transmit power reduction leading to the emergence of hidden nodes manifests in the same way as mentioned earlier in the context of Method 1 and is depicted in Figure 11.

Figure 11 highlights how reduction of transmit power could lead to the hidden terminal problem. The scenario is similar to that of Figure 2; however the nodes do not have the same default transmit power (reference transmit power). To overcome the OBSS transmission (-65 dBm) from Cx and simultaneously engage in an SR transmission, STA-A needs to increase its OBSS_PD threshold by 18 dBm and reduce its transmit power by the same amount:

$$TxPow = 23 - 18 = 5\, dBm,$$

$$OBSS_{PD} = -82 + 18 = -64\, dBm$$

This reduction in transmit power leads to a weaker signal from STA-A when it transmits. STA-B therefore receives a signal of -83 dBm from STA-A. As this is below the default (and minimum) CCA threshold of -82 dBm, STA-B can't hear STA-A. STA-B could therefore assume medium is free and transmit to AP1 even when STA-A is transmitting. This could result in collisions with STA-A's transmissions at AP1.

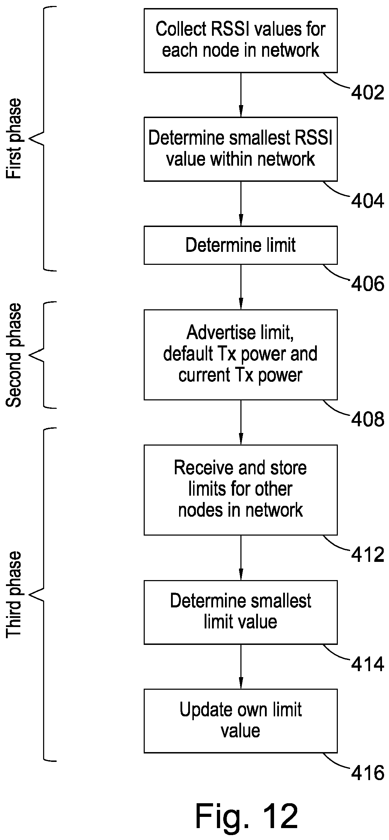

The underlying principle of adhering to a limit is the same as in Method 1. The main difference however, is the way in which the limit is calculated and advertised as shown in Figures 12-14.

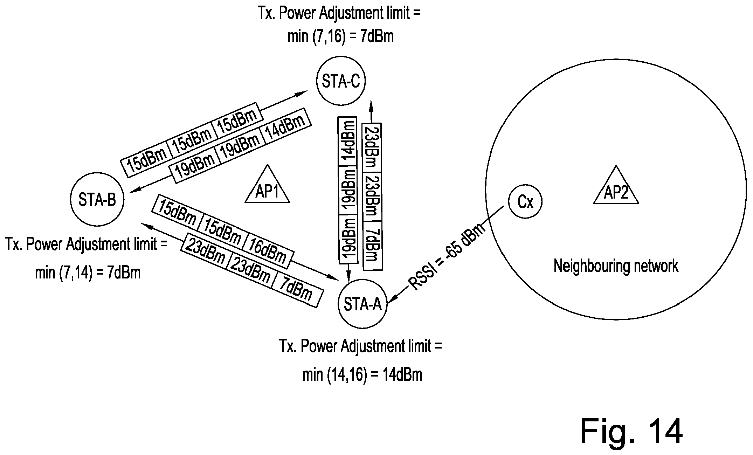

Broadly, there are three phases: local limit calculation, limit advertisement and identifying limit for self-adjustment of transmit power. In the first phase, each STA measures the RSSI of transmissions from MyBSS nodes and identifies the least of these. The difference between the least value and the default OBSS_PD threshold (-82 dBm) yields a locally calculated limit value to be advertised to the other nodes in the network. In the second phase, each STA will advertise its locally calculated limit value along with its reference transmit (Tx) power value (default transmit power value) and the transmit power in use for the current transmission (as shown in Figure 14). In the third phase, each STA will store the limit values advertised by other MyBSS nodes and identify the smallest limit value from these advertised limit values. This smallest value is set as the limit value for the node and is used as a self-adjustment limit for capping the transmit power when deciding on whether to engage in a spatial reuse transmission.

It should be noted that the order of phases 2 and 3 may be swapped as a node may receive information before it gets a chance to advertise its own limit. The STA keeps cycling through these three phases during operation time.

Figure 12 shows a second method of determining a limit according to an arrangement. The first phase of the method is the same as in Figure 6a, where the node collects RSSI values from nodes within its own network (MyBSS nodes) 402, determines the smallest RSSI value 404 and determines a locally calculated limit based on the smallest RSSI value 406 (e.g. by subtracting the default OBSS_PD threshold).

In the second phase, the node advertises 408 its locally calculated limit value, its reference transmit power value, and the transmit power used for the transmission to the other nodes in the network.

In the third phase, the node receives and stores 412 the limit values advertised by the other nodes in the network. The node determines the smallest limit value 414 selected from the limits advertised by the other nodes in the network. The limit value 416 that the node uses for transmission is then updated to be set to this smallest limit value. The node continuously updates its transmit limit value when new smallest limit values are received. Equally, the node continuously updates its locally calculated limit value based on the RSSI values of received signals and advertises this locally calculated limit value to other nodes in the network. Accordingly, the advertised limit value will likely be different to the limit value that is actually implemented, as the node selects its transmit limit value from the limit values advertised by the other nodes in the network.

As discussed above, Method 2 selects a limit for a node from the limits advertised by the other nodes in the network. Accordingly, the limit is not the smallest limit across the whole network, but the smallest limit for other nodes in the network (i.e. excluding the locally calculated limit for the node itself). This avoids setting the limit to too low a value (i.e. avoids being being too conservative). Nevertheless, in an alternative arrangement, the limit is set to the smallest of the advertised limit and the locally calculated limit for the node.

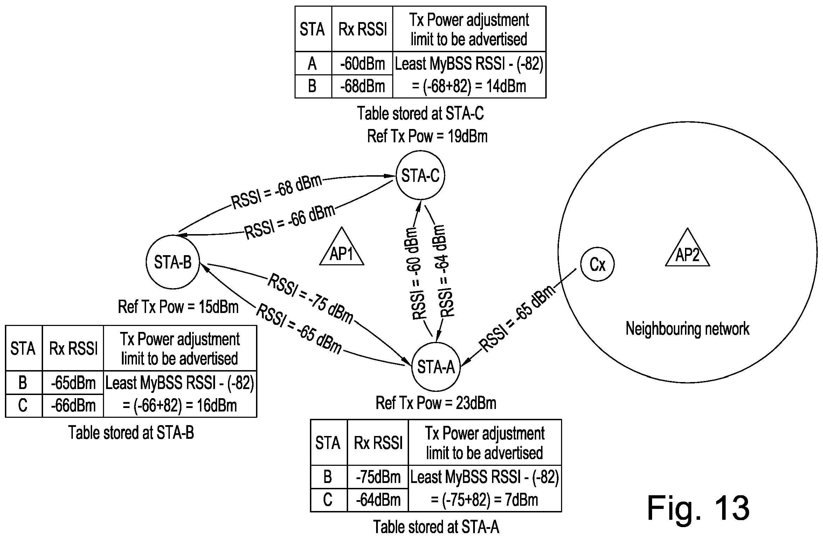

Figure 13 shows the calculation of limits according to the second method. This shows the first stage mentioned above. Each station receives signals from the other stations in the network. The received RSSI (Rx RSSI) values are stored in each station. Each station calculates the smallest received RSSI from the network and subtracts this from the default OBSS_PD threshold. This provides locally calculated limits for STA-A, STA-B and STA-C of 7 dBm, 16 dBm and 14 dBm respectively.

Figure 14 shows the advertisement of limits according to the second method. The reference transmit powers for STA-A, STA-B and STA-C are 23 dBm, 15 dBm and 19 dBm respectively. The locally calculated limits for STA-A, STA-B and STA-C are 7dBm, 16dBm and 14dBm respectively.

Each node advertises its reference transmit power, the transmit power used in the current transmission and its locally calculated limit. These values can be sent to the other nodes in the network in the header of a transmitted packet. Each node then determines the smallest of the received limits and sets its own transmit power adjustment limit to equal this smallest value. In this case, the transmit power adjustment limit would be set to 14 dBm for STA-A, 7 dBm for STA-B and 7 dBm for STA-C. As discussed with respect to Figure 7, the reference transmit powers and the actual transmit powers are advertised to ensure that the correct least MyBSS RSSI values can be calculated.

As discussed above, each node sets its limit to the smallest of the advertised limit values (i.e. the limit values calculated by the other nodes in the network). This is because the nodes may not necessarily be transmitting using the same transmit power and the channel reciprocity may not hold (i.e., the channel in the forward link may be different from the channel in the backward link).

In the scenario of Figure 14, the weakest signal that STA-A can hear is from STA-B has an RSSI of -75 dBm; therefore, its locally calculated limit is 7 dBm. This is advertised to STA-B to tell STA-B that it should not reduce its transmit power by any more than 7 dBm otherwise, STA-A won't be able to carrier sense STA-B. Thus, the locally calculated limit is used to tell the other nodes what limits they should enforce.

Similarly, the weakest signal heard by STA-B is from STA-C at -66 dBm. This results in a locally calculated limit at STA-B of 16 dBm. Thus, STA-B tells other nodes not to reduce their transmit power by any more than 16 dBm otherwise it may not carrier sense them. In this case, STA-A could potentially have an extra 1 dBm leeway (i.e. even if it reduced transmit power by 17 dBm, it could still be heard at STA-B); however, STA-B advertises only a conservative value (the smallest value) to reduce signalling overhead. Otherwise, STA-B would have to advertise node specific limit values (16 dBm for STA-C and 17 dBm for STA-A).

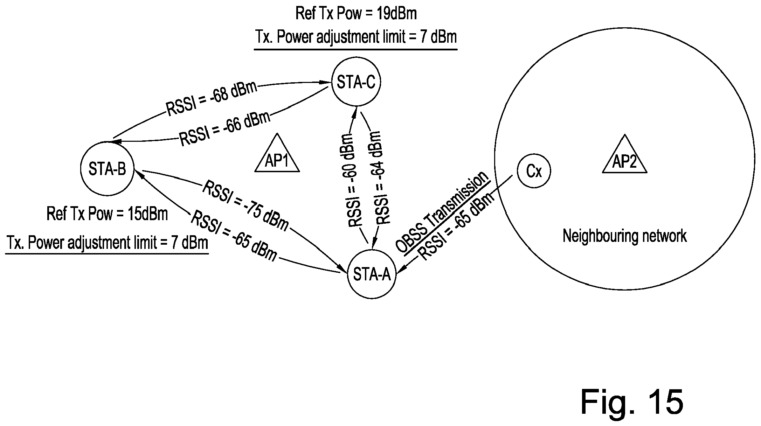

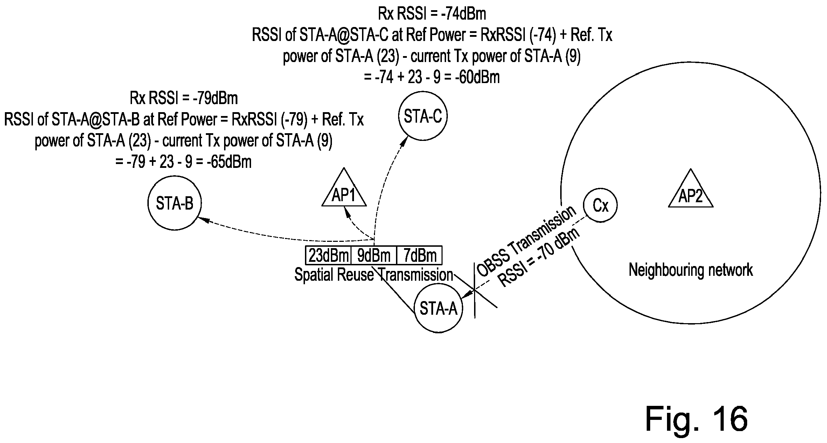

Figures 15 and 16 show how Method 2 works assuming all nodes have already gathered neighbourhood information in MyBSS and identified their self-adjustment limit.

Figure 15 shows a first scenario for setting the OBSS_PD threshold according to the second method. The OBSS transmission can be heard at STA-A at -65 dBm. As discussed with regard to Figures 13 and 14, the Tx power update limit for STA-A is 14dBm. Accordingly, STA-A cannot increase its OBSS_PD threshold beyond -68 dBm (-82 + 14) which is not enough to exclude the OBSS transmission. STA-A therefore decides not to engage in an SR transmission.

Figure 16 shows a further scenario for setting the OBSS_PD threshold according to the second method. In contrast, to the scenario shown in Figure 15, the OBSS transmission can be heard at -70 dBm. Using the adjustment limit, STA-A can increase its OBSS-PD threshold to -68dBm (-82+14) which is enough to filter out the OBSS transmission. STA-A therefore reduces its transmit power by the adjustment limit from 23 dBm to 9 dBm (23-14) and engages in an SR transmission. It also advertises the updated Tx power (9 dBm) in addition to its reference Tx power (23 dBm) and the locally calculated limit value (7 dBm) in the packet header of the SR transmission. Note that the locally calculated limit value of 7 dBm differs from the adjustment limit of 14 dBm used by the node as the adjustment limit is selected from the limits advertised by the other nodes in the network.

Advertising the above information helps other MyBSS nodes to take note of the reduced RSSI and extrapolate from it what the real RSSI would be should the STA engaging in an SR transmission be transmitting at reference power. The RSSI extrapolation is shown above STA-B and STA-C in Figure 15. This is the same extrapolation method as discussed in relation to Figure 5; however, instead of applying a default reference transmit power, the node applies the reference transmit power that is advertised in the received signal. Accordingly, the estimated RSSI is:

$$Est.RSSI = Measured\ RSSI + Advertised\ Reference\ Tx\ Power - Advertised\ Tx\ Power$$

Similar to Method 1, there are signalling requirements in Method 2, in particular some bits in the packet header need to be reserved for advertising the reference Tx power, current Tx power and the locally calculated limit value. As mentioned before, the Tx power could be advertised either as absolute values or offset from the Reference power value. This is implementation dependent. In general, the information that needs to be signalled could potentially be included either in the SIGNAL (SIG) field of the PHY header or the MAC header.

Again, similar to the previous method, there is scope for shifting some of the overhead from the STA side to the AP side. This can be accomplished by all the STA's reporting their reference Tx power to the AP during association time (when connecting to the AP). The AP could then advertise the list of associated STAs and their reference transmit power values via the beacon thereby obviating the need for the STAs to advertise this information on a packet by packet basis.

**Method 3:**

Whilst Method 2 caters for scenarios where nodes may use non-homogeneous transmit power and where channel reciprocity may not hold, the realisation of this technique introduces additional overhead, in particular the need for signalling the reference transmit power value, the transmit power in use and the limit value on a packet by packet basis and also the need to agree support for the same in the standard. Method 3 proposes an alternative approach which obviates the need for the aforementioned signalling requirement thereby resulting in a simple implementation.

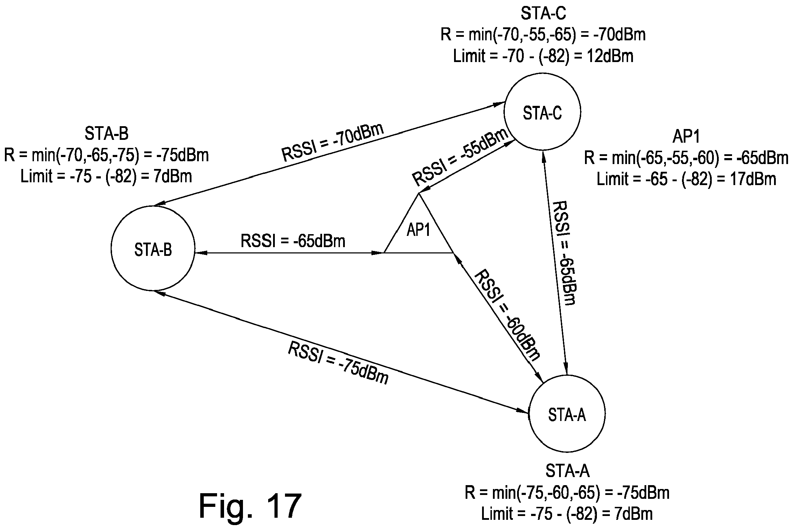

Figure 17 shows the third method of adjusting transmit power according to an arrangement. Some of the assumptions of this method are in common with those of Methods 1 and 2, e.g., nodes measure RSSI of MyBSS transmissions and keep a record of these. Additionally, the least RSSI of MyBSS transmissions feeds into the computation of the limit value. This limit value is then used to cap transmit power adaptation (provided that the limit value is less than the reference transmit power value).

It is worth bearing in mind that an approximate value of the 'limit' can be utilised. Absolute precision may not be required as the limit is only used when exploring whether an opportunity to engage in a spatial reuse transmission exists. The worst that can happen due to a temporary mismatch between the actual and estimated value of limit, is that a node may lose some spatial reuse opportunities. Whilst this may have some performance implications, it significantly simplifies implementation which is quite desirable from a practical deployment perspective. Essentially, it is an overhead vs performance trade-off.

Spatial Reuse Power (SRP) is a metric which is a sum of the transmit power (T) to be used for a transmission attempt and the RSSI of the recipient at the transmitter (I). This can be advertised via the SIG header of a transmission. The proposal in Method 3 aims to exploit this feature so that additional signalling (beyond the SRP that may already be advertised) may be avoided.

$$SRP = Tx\ Power + RSSI\ of\ Recipient\ at\ Transmitter = T + I$$

Accordingly, the SRP for a transmission attempt is based on the RSSI of one or more signals received by the transmitter from the intended recipient of the transmission.

In an infrastructure setup, there exist two types of communication links: AP to STA or STA to AP. Thus, computing the SRP is quite straightforward for either type of transmission, and is based on the RSSI of signals between the access point and the stations. For the sake of illustration, Figure 17, shows the use of instantaneous values of RSSI between node pairs. Having said this, it is reasonable to assume that instead of using the instantaneous value of RSSI between a node-pair smoothed values (for instance, averaged values such as moving averages) could also be employed in computing the SRP. The key point is that if a node employs transmit power control (TPC), the value of SRP it advertises will be lower in comparison to when the node just uses the reference transmit power (no TPC). Also, since a node employing TPC uses a lower transmit power, the recipient and other nodes that overhear this will receive weaker signals from this node and hence the RSSI they record will be lower than what they would hear from the same node if it were transmitting at the reference power.

Figure 17 illustrates how the method works in a practical setting. As with earlier Figures, there are three stations (STA-A, STA-B, STA-C) and an access point (AP1). For each STA the reference Tx power (T) is 19 dBm. For each AP the reference Tx Power (T) is 23 dBm. For all APs and STAs the default CCA threshold (CCAt) is -82 dBm, the default OBSS_PD threshold is -82 dBm and the limit is calculated as the difference between the minimum MyBSS RSSI (R) and the OBSS_PD:

$$Limit = R - OBSS\_PD$$

When the nodes start-up they won't have any neighbourhood information and will therefore use the default CCA threshold and OBSS_PD threshold value of -82dBm. Each node (both AP and STAs) maintains a table which records information (such as, but not limited to, Node ID, SRP and RSSI) pertaining to the MyBSS nodes. As soon as a node (AP or STA) hears a MyBSS transmission, it updates information pertaining to this node in its table.

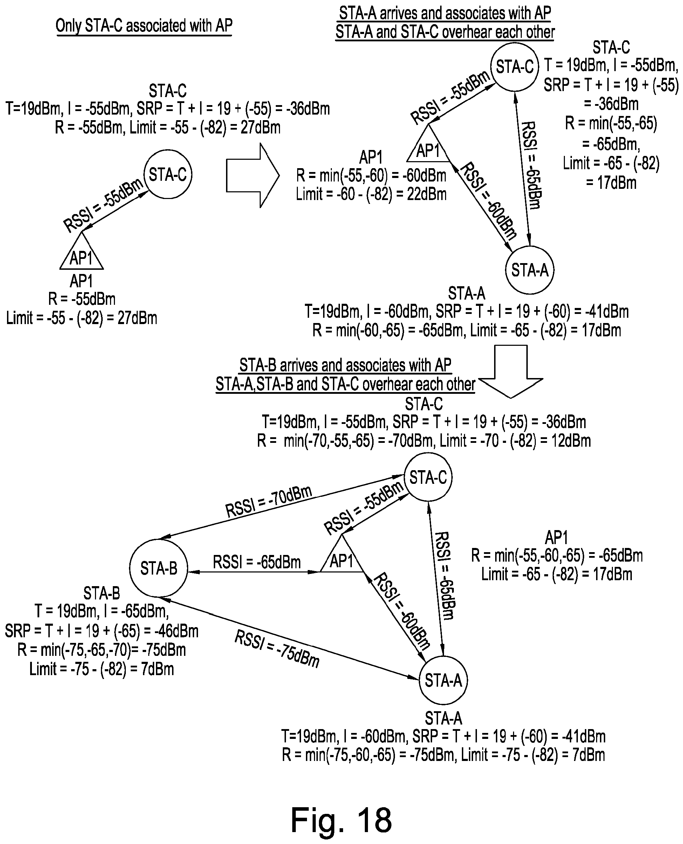

Figure 18 shows the sequence for nodes determining their respective limits according to the third method. In the present scenario STA-C first associates with AP1 (top left), learns the RSSI of the link with the AP and sets its limit and least MyBSS RSSI values accordingly. In this case the RSSI (R) of signals between STA-C and AP1 is -55 dBm and the limit for STA-C is:

$$Limit = -55 - (-82) = 27\ dBm$$

The limit for AP1 is also 27 dBm as the RSSI at AP1 is also -55 dBm.

In addition, as the transmit power (T) is 19 dBm and the RSSI (I) of signals from AP1 at STA-C is -55 dBm, the spatial reuse power (SRP) for STA-C is:

$$SRP = T + I = 19 + (-55) = -36$$

In the next step (top right) STA-A arrives, associates with AP1 and subsequently engages in transmissions with the access point. STA-C will overhear these transmissions and update its table to include an RSSI value for signals received from STA-A. In this case, the RSSI of signals received from STA-A by STA-C is -65 dBm. As this value is lower than the RSSI for signals from AP1, STA-C updates its least MyBSS RSSI value to this value (least MyBSS RSSI = -65 dBm). This results in the limit being updated to:

$$Limit = -65 - (-82) = 17\ dBm$$

Similarly, when STA-C engages in transmissions with the AP1, STA-A overhears these transmissions and updates its table. Equally, AP1 will also update its table with every reception of a signal. The values for these entities are:

AP1:

$$R = min(-55, -60) = -60 dBm$$

$$Limit = -60 - (-82) = 22 dBm$$

STA-A

$$T = 19dBm, \qquad I = -60dBm$$

$$SRP = T + I = 19 + (-60) = -41dBm$$

$$R = \min(-60, -65) = -65dBm$$

$$Limit = -65 - (-82) = 17dBm$$

In the next step (bottom) STA-B arrives, associates with the AP and follows the same procedure. For STA-B:

$$T = 19dBm, I = -65dBm$$

$$SRP = T + I = 19 + (-65) = -46dBm$$

$$R = \min(-75, -65, -70) = -75dBm$$

$$Limit = -75 - (-82) = 7dBm$$

As the nodes build the picture of the radio neighbourhood, they adapt the limit value. For instance, when STA-A overhears STA-C, it updates its limit value to:

$$Limit = -65 - (-82) = 17dBm$$

STA-A may engage in SR subsequently using this limit value. Later when STA-B arrives and STA-A overhears the transmissions from STA-B at -75 dBm, STA-A updates its limit value to:

$$Limit = -75 - (-82) = 7dBm$$

Equally, STA-C overhears the transmissions from STA-B at -70 dBm and updates its limit to:

$$Limit = -70 - (-82) = 12dBm$$

Thus, after a while (after nodes stop being added to the network) the limit values at all of the nodes stabilise.

During each transmission, each node advertises the SRP value for the transmission (i.e. the SRP value associated with the current transmit power and the RSSI of signals received from the intended recipient, e.g. the access point). During the operational phase, when nodes hear/overhear transmissions, they may update the SRP value corresponding to the transmitter in their table. Since nodes do not explicitly signal whether the transmission they are engaging in is or isn't a spatial reuse transmission, a key challenge is to ascertain this so that the table may be updated only for non-SR transmissions. This is accomplished implicitly using the logic described earlier: i.e., the SRP for a normal transmission being higher than the SRP for a spatial reuse transmission as the transmit power used for the latter is usually lower than that for the normal transmission and/or RSSI of the received signal is lower for a SR transmission than the one at reference power. The need to distinguish this is important for the following reason. When a node engages in normal transmission (i.e. at the reference Tx Power), its RSSI overheard at another node is X. When the same node engages in a spatial reuse transmission, its RSSI will now be Y (where Y < X). If the overhearing node were to use the reduced RSSI of Y when updating its least MyBSS RSSI then the limit it computes will be incorrect (conservative) since this MyBSS transmission at the lower Tx power value is a spatial reuse attempt. In practice, an overhearing node should only update its least MyBSS RSSI (and therefore the limit value) if it overhears a transmission at the reference transmit power.

Nodes that hear/overhear a transmission will cache the first SRP value that they hear. If they hear a signal with an SRP value from the same node which is lower than the cached value and/or with an RSSI that is lower than the cached value, it is determined that this is a spatial reuse transmission and they will not update the SRP and RSSI entries in their table. On the other hand, if the SRP value heard is greater than or equal to the cached SRP value, the overhearing nodes will update both the SRP and RSSI entries in their table corresponding to this node and update their limit value immediately. Thus, the limit value at all nodes in the network continues to be up to date and will eventually stabilise. It should also be noted that if the limit value happens to be higher than the reference transmit power value, the node may not attempt SR transmission as reducing the transmit power by the limit will yield a negative transmit power value which must be avoided.

With respect to the AP, the AP could notify all MyBSS nodes of its normal SRP for each AP-STA link via the beacon. Every time a new node associates with the AP, or an existing node leaves the network, it can update its least MyBSS RSSI accordingly and advertise the SRP value for the new/expired link. Each transmission within the network contains the SRP value for that transmission (e.g. within a header). This allows each node to determine whether or not a given transmission is an SR transmission based on the cached and observed values of SRP.

In general, by relying on the SRP values, the need for including additional signalling for advertising whether a transmission attempt is or isn't a spatial reuse attempt is obviated. Having said this, if the packet header can be used to signal spatial reuse attempts (e.g. a single bit with 0 indicating a Tx at reference power and 1 indicating a Tx at reduced power), such explicit signalling would eliminate the need for estimation. The benefit of avoiding the explicit signalling is that this reduces the overhead of the proposed method (in comparison to Methods 1 and 2) and simplifies implementation. Moreover, this method works irrespective of whether nodes in the network use same/different transmit power values.

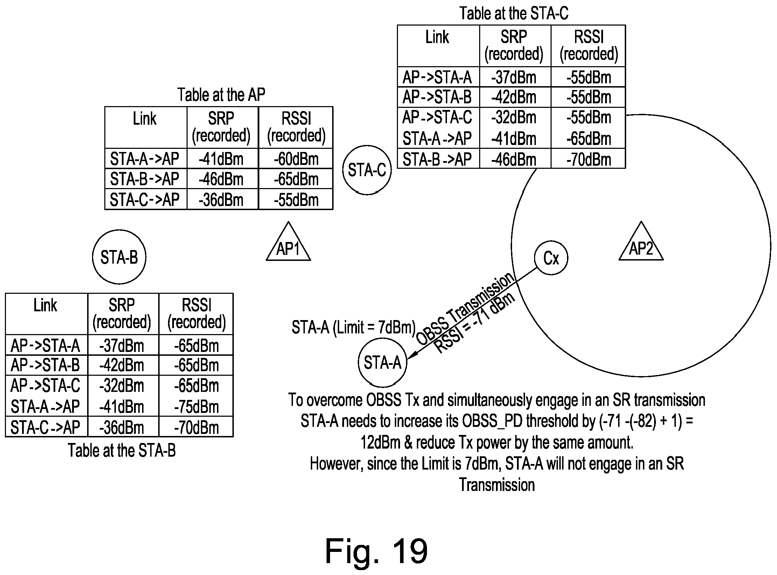

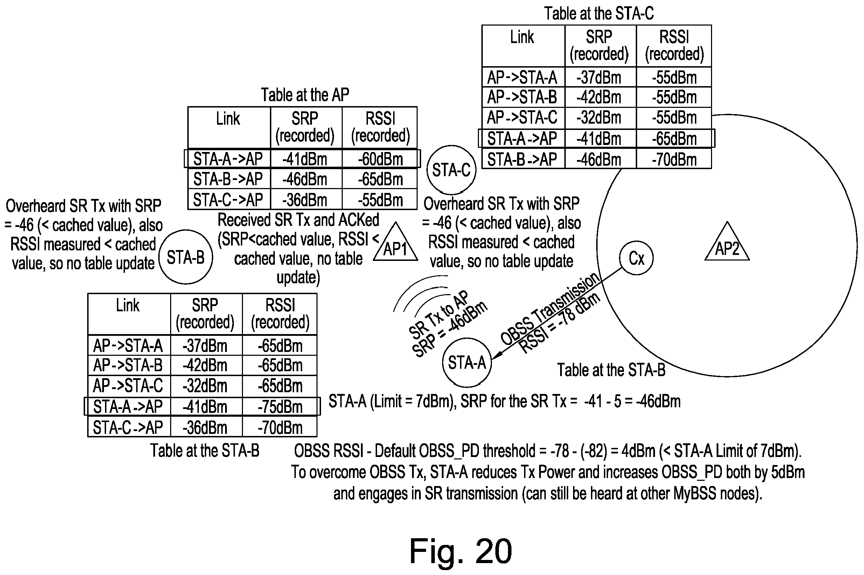

In terms of the actual decision of whether or not to engage in spatial reuse, the same logic is used as that adopted in Method 1 and 2 and is shown in Figure 19 and Figure 20 respectively. That is, if the OBSS transmission can be overcome without reducing the transmit power any more than the limit, the node in question will engage in a spatial reuse transmission. Otherwise, it will not engage in a spatial reuse transmission. In addition, as mentioned earlier, if the limit value is greater than the reference transmit power value, the node will refrain from engaging in an SR transmission.

Figure 19 shows an arrangement according to the third method in which a node does not engage in a spatial reuse transmission. The arrangement of nodes and the transmission strengths are equivalent to those of Figure 18. Each of the three nodes maintains a table that includes the RSSI and SRP for the signals received by the node. The RSSI value for a given node for a communication between two nodes is the RSSI value recorded at the given node when the two nodes are communicating between each other. The SRP values are those that are cached when signals within the network have been overheard (each signal including its own SRP value). As mentioned above, the RSSI and SRP values stored for a given node are only updated in the table if a transmission is overheard that has an SRP value that is higher than the currently stored SRP value and/or if the measured RSSI is greater than the one in the table corresponding to this node.

A neighbouring network has a node (Cx) that transmits an OBSS transmission. This has an RSSI at STA-A of -71 dBm. To overcome the OBSS transmission and simultaneously engage in an SR transmission, STA-A needs to increase its OBSS_PD threshold by (-71 -(-82) + 1) = 12 *dBm* and reduce its transmit power by the same amount; however, since the limit of 7 dBm (see Figure 18) is smaller than this required decrease in transmission power, STA-A will not engage in an SR transmission.

Figure 20 shows an arrangement according to the third method in which a node engages in a spatial reuse transmission. As with Figure 19, each node maintains a table of the recorded RSSI and SRP for each communication link. In this case, the RSSI of the OBSS transmission is -78 dBm. The difference between the OBSS RSSI and the default OBSS_PD threshold is therefore 4 dBm. As this is less than the limit for STA-A of 7 dBm, STA-A is able to increase its OBSS_PD by 5 dBm to filter out the OBSS transmission. At the same time, STA-A reduces its transmit power by 5 dBm so that it is not heard by Cx. In the present case, the transmit power would be reduced from 19 dBm to 14 dBm.

STA-A then engages in SR transmission which can still be heard at other MyBSS nodes as the reduction in transmission power is within the limit for STA-A. The SRP for the SR transmission from STA-A to AP1 is reduced by 5 dBm as the transmission power has been reduced by 5 dBm but there has been no change in the strength of the signals received by STA-A from AP1:

$$SRP = -41 - 5 = -46\,dBm$$

The new SRP value is advertised in the header of the SR transmission. The SR transmission is received and acknowledged (ACK) at the access point (AP1).

As the new SRP value contained in the signal is less than the value of -41 dBm that is currently cached in the table at the AP (that was determined when the network was initialised), the AP determines that the transmission is an SR transmission and so does not update the respective SRP value in its table. Equally, as the RSSI value is less than that stored in the table for this communication link, the RSSI value is not updated either. For the same reasons, STA-B and STA-C, which overhear this communication, also determine that the transmission is an SR transmission and refrain from updating the equivalent values in their respective tables.

The proposal described as a part of Method 3 assumes that SRP values are advertised in each unicast packet.

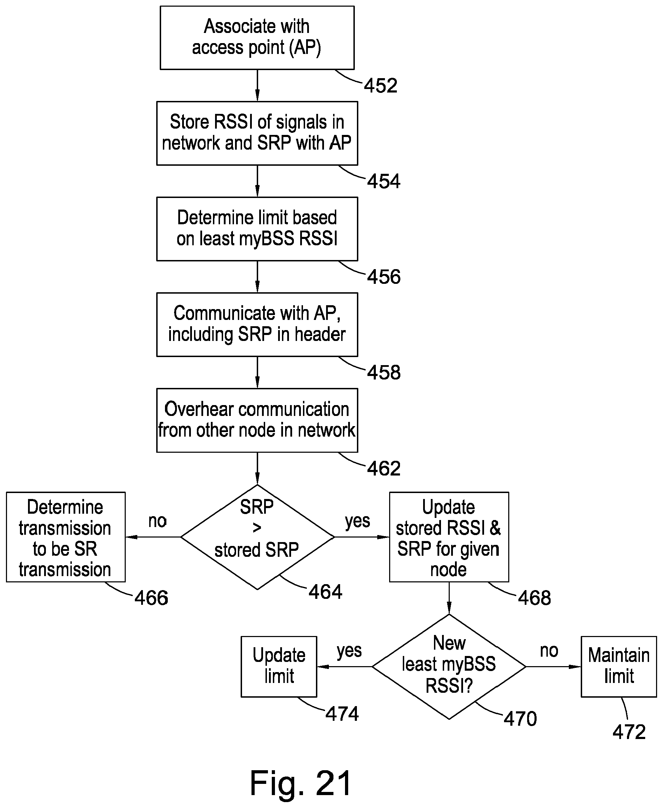

Figure 21 shows the third method according to an arrangement. The node begins by associating 452 with the access point (AP). During association it will receive a number of association responses from the access point. In addition, the node may overhear signals from other nodes in the network. The node stores 454 the RSSI values of the signals in the network (including the signals from the access point) in a table, associating each RSSI value with the corresponding other nodes in the network.

In addition, the node calculates and stores the SRP for transmissions to the access point. Any signals overheard by the node from other nodes will include SRP values in their headers. The node therefore also stores the SRP values associated with each other node transmitting in the network.

The node determines its limit 456 based on the smallest RSSI value (least myBSS RSSI) as discussed above. The node then communicates with the access point, including its SRP value in the header 458.

When the node hears further communications from other nodes in the network 462, it first checks whether it has an RSSI and SRP value stored for the respective nodes. If a communication is received from a new node (without any values stored in the table) the node adds the RSSI and SRP values to the table. If values already exist in the table for a given transmitting node, the node checks 464 whether the SRP contained in the transmission is greater than the stored SRP value for that node. If the new SRP value is not greater, then the node determines the transmission to be an SR transmission and so does not update the corresponding values in the table. If the SRP value is greater, then the corresponding RSSI and SRP values in the table are updated 468. The node then determines if a new smallest RSSI value has been found 470 (i.e. whether the new RSSI value smaller than any of the previously stored RSSI values). If not, the limit for the node is kept the same 472. If so, then the limit 474 is updated using the new least myBSS RSSI.

Accordingly, the third method avoids the need for each node to transmit its default and current transmit powers by having each node keeping track of the SRP transmitted in each message. Any transmission having an SRP that is lower than the stored value is assumed to be a spatial reuse transmission and therefore ignored for the purpose of calculating a limit.

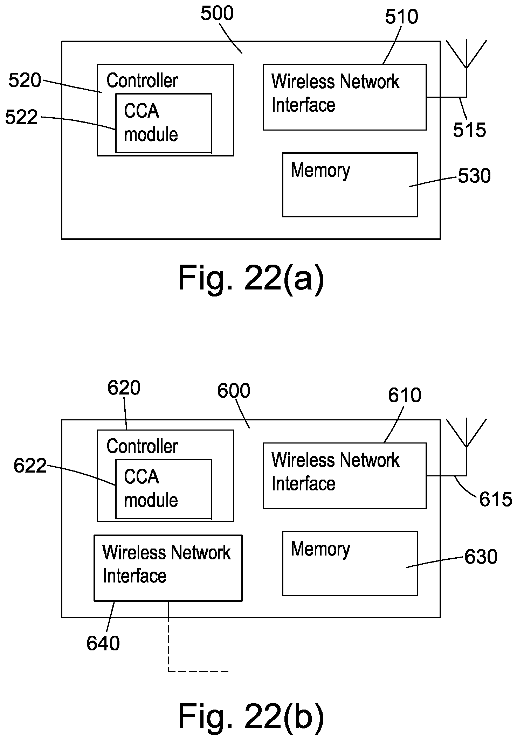

Figure 22 shows (a) a wireless station 500, and (b) wireless access point 600 according to an arrangement. The station 500 comprises a wireless network interface 510, a memory 530 and a controller 520 comprising a clear channel assessment (CCA) module 522. The wireless network interface 510 is coupled to an antenna 515. The wireless network interface 510 is operable to send and receive signals using the antenna 515 on one or more of a plurality of radio frequency channels defined in a radiofrequency spectrum. The controller 520 is configured to manage the wireless network interface 510 to send and receive signals according to a communication protocol to, for example, stations or access points as described herein. The CCA module 522 is configured to determine when the channel is clear to reduce frame collisions at the access point 600. The controller 520 is in communicative connection with the memory 530 which stores computer readable code for instructing the controller to perform the functions described herein.

The access point 600 comprises a wireless network interface 610, a memory 630 and a controller 620 comprising a clear channel assessment (CCA) module 622. The wireless network interface 610 is coupled to an antenna 615. The access point 600 functions much like the station 500, with the exception that the access point 600 includes a wired network interface 640 that is configured to connect to a wired network, for instance, via an Ethernet connection. The access point 600 is configured to provide wireless stations 500 with access to the wired network.

The controllers 520 and 620 are configured to manage connections with nodes in the wireless network. As discussed herein, the controllers 520 and 620 implement dynamic sensitivity control (DSC) to vary the OBSS_PD thresholds to avoid interference from nearby wireless networks. The transmit power for the access point 600 and station 500 are also varied to reduce interference with neighbouring networks. The controllers 520 and 620 implement the methods described herein to limit the amount that the OBSS_PD thresholds and the transmit powers can be varied to avoid collisions within the network.

The methods carried out by the modules of the access point 600 and the stations 500 are described in more detail herein. It will be appreciated that these methods are implemented by software or firmware code that may be stored in memories 530 and 630 of the station 500 and access point 600 respectively and that, when executed by the respective controllers 520 and 620 (or their respective CCA modules 522 and 622) puts the described methods into practice.

Any reference to modules 522 and 622 that form part of the controllers 520 and 620 is not intended to be limiting and is, instead, intended to be understood as an operation/method put into practice by the controllers 520 and 620 respectively, when executing the corresponding software/firmware instructions. In addition, any reference to controllers 520 and 620 is not intended to be limiting and is, instead, intended to be understood as a hardware component such as a processor that is capable of performing computational tasks.

As discussed above, implementing DSC in a wireless node and reducing the transmit power by an equivalent amount can result in improved network performance and reduced interference from neighbouring networks; however, it can also result in an increased number of collisions within the network. Arrangements implement a method in which a limit is set for each node, below which the transmit power of the node cannot be lowered. This ensures that nodes within the network can still hear each other and therefore prevents collisions between competing transmissions.

Whilst the above arrangements discuss the use of RSSI values, any other indication of the strength and/or power of a received signal may be utilised to set a limit on how far the transmission power may be reduced.

While certain arrangements have been described, the arrangements have been presented by way of example only, and are not intended to limit the scope of the inventions. Indeed, the novel methods and devices described herein may be embodied in a variety of other forms; furthermore, various omissions, substitutions and changes in the form of the methods and systems described herein may be made.

## Claims

1.   A device for managing wireless communication over a transmission channel within a network, the device comprising a controller configured to:

   obtain a set of received signal strength values for signals transmitted over the transmission channel within the network;
   determine a lowest received signal strength value of the set of received signal strength values; and
   determine a maximum limit by which a transmission power for the transmission channel may be reduced from a predetermined transmission power, the maximum limit being based on the lowest received signal strength value.

2.   A device according to claim 1 wherein the maximum limit is determined to be the difference between the lowest received signal strength value and a predefined threshold.

3.   A device according to claim 1 or claim 2 wherein:

   the device further comprises a wireless interface for communicating wirelessly over the transmission channel with wireless stations in the network; and
   obtaining a set of received signal strength values comprises:

      receiving over the transmission channel, via the wireless interface, signals from a first set of stations within the network; and
      determining, for each signal, a corresponding received signal strength value.

4.   A device according to claim 3 wherein the controller is further configured to:

   receive over the transmission channel, via the wireless interface, a first signal from outside of the network;
   determine a first received signal strength value corresponding to the first signal received from outside of the network;
   determine whether the first received signal strength value is greater than a first threshold; and
   in response to the first received signal strength value not being greater than the first threshold, permit the wireless interface to transmit at the transmission power to a station in the network.

5.   A device according to claim 4 wherein the controller is further configured to, in response to the first received signal strength value being greater than the first threshold:

   determine whether the maximum limit is greater than the difference between the first received signal strength value and a predefined threshold;
   in response to the maximum limit being greater than the difference:

      increase the first threshold so that the first threshold is greater than the first received signal strength value and so that the first threshold is greater than the predefined threshold by a first amount; and
      set the transmission power to be less than the predetermined transmission power by the first amount; and

permit the wireless interface to transmit at the transmission power to a station in the network.

6. A device according to claim 5 wherein the controller is further configured to, in response to the maximum limit not being greater than the difference, inhibit transmissions from the device over the channel via the wireless interface for the duration of the first signal.

7. A device according to claim 5 or claim 6 wherein the controller is configured to include an indication of the transmission power in the transmission, wherein the indication comprises one or more of a spatial reuse identifier, a spatial reuse power value, the transmission power, the predefined transmission power and the first amount.

8. A device according to any of claims 3-7 wherein determining, for each signal, a corresponding received signal strength value comprises:

determining whether the signal includes an indication of a second amount by which the transmit power for the signal has been reduced;
in response to determining that the signal includes an indication of the second amount, determining a predicted received signal strength value based on the received signal strength of the signal and the second amount and setting the corresponding received signal strength value to equal the predicted received signal strength value; and
in response to determining that the signal does not include an indication of the second amount, setting the corresponding received signal strength value to equal the received signal strength.

9. A device according to any of claims 3-8 wherein:

each signal includes a corresponding spatial reuse power value;
the device further comprises memory;
obtaining a set of received signal strength values comprises:

storing in the memory, for each of the first set of stations, a respective spatial reuse power value and a respective received signal strength value;
receiving over the channel, via the wireless interface, a further signal from one of the first set of stations, the further signal comprising a further spatial reuse power value;
determining a further received signal strength value for the further signal;
determining whether the further spatial reuse power value is greater than the respective spatial reuse power value stored in the memory and/or whether the further received signal strength value is greater than the respective received signal strength value stored in the memory; and
in response to determining that the further spatial reuse power value is greater than the respective spatial reuse power value stored in the memory and/or determining that the further received signal strength value is greater than the respective received signal strength value stored in the memory, storing the further spatial reuse power value and the further received signal strength power value in the memory; and

determining a lowest received signal strength value of the set of received signal strength values comprises determining the lowest received signal strength value from the received signal strength values stored in the memory for the first set of stations.

10. A device according to claim 1 wherein the controller is configured to:

obtain, for each of a plurality of stations in the network, a further maximum limit calculated based on signals received by the respective station; and
set the maximum limit for a first station to equal the smallest of the further maximum limits for the plurality of stations.

11. A device according to claim 1 wherein:

obtaining a set of received signal strength values comprises receiving, from a wireless station in the network, a first set of received signal strength values corresponding to signals received by the wireless station over the transmission channel from other wireless stations in the network; and
the device is further configured to send the maximum limit to the wireless station.

12. A device according to claim 1 wherein the set of received signal strength values comprises a first set of received signal strength values corresponding to signals received by a first wireless station over the transmission channel from other wireless stations in the network and wherein:

determining the lowest received signal strength value comprises determining the lowest received signal strength value of the first set of received signal strength values; or

wherein obtaining a set of received signal strength values further comprises receiving, from one or more further wireless stations, a second set of received signal strength values corresponding to signals received over the transmission channel by the one or more further wireless stations from other wireless stations in the network, and determining the lowest received signal strength value comprises determining the lowest received signal strength value from the first and second sets.

13. A device for managing wireless communication over a transmission channel within a network, the device comprising a wireless interface and a controller configured to:

receive over the transmission channel, via the wireless interface, a first signal from outside of the network;
determine a first received signal strength value corresponding to the signal received from outside of the network;
determine whether the first received signal strength value is greater than a first threshold; and
in response to the first received signal strength value being greater than the first threshold:

determine whether a maximum limit is greater than the difference between the first received signal strength value and a predefined threshold; and
in response to the maximum limit being greater than the difference:

increase the first threshold so that the first threshold is greater than the first received signal strength value and so that the first threshold is greater than the predefined threshold by a first amount;
set a transmission power for the transmission channel to be less than the predetermined transmission power by the first amount; and
permit the wireless interface to transmit over the transmission channel at the transmission power to a station in the network.

14. A device according to claim 13 wherein the controller is configured to:

in response to the first received signal strength value not being greater than the first threshold, permit the wireless interface to transmit over the transmission channel at the transmission power to a station in the network; and
in response to the maximum limit not being greater than the difference, inhibit transmissions from the device via the wireless interface over the transmission channel for the duration of the first signal.

15. A device according to claim 13 wherein the controller is configured to:

receive over the transmission channel, via the wireless interface, signals from wireless stations within the network;
determine a set of received signal strength values corresponding to the received signals;
transmit to an access point in the network, via the wireless interface, the set of received signal strength values or a lowest received signal strength value of the set of received signal strength values; and
receive from the access point, via the wireless interface, a maximum limit by which a transmission power for the transmission channel may be reduced from a predetermined transmission power, the limit being based on the lowest received signal strength value of the set of received signal strength values.

Fig. 1

Fig. 2

Fig. 3

Fig. 4

Measured Rx RSSI = -72dBm
RSSI of STA-A@STA-C at Ref Power = Measured RxRSSI
(-72) + Reference Tx Power (15) - Power advertised in the
SR transmission (8)
= -72 + 15 - 8 = -65dBm

Measured Rx RSSI = -82dBm
RSSI of STA-A@STA-B at Ref Power = Measured RxRSSI
(-82) + Reference Tx Power (15) - Power advertised in the
SR transmission (8)
= -82 + 15 - 8 = -75dBm

STA-C

AP1

STA-B

SR Tx
Tx Pow = 8dBm

SR Tx
Tx Pow = 8dBm

SR Tx
Tx Pow = 8dBm

Cx

AP2

Neighbouring network

STA-A

Scenario 2
RSSI = -78dBm

TxPow = 15-7 = 8dBm
OBSS PD = -82+7 = -75dBm
STA-A overcomes OBSS Tx

| STA | Rx RSSI | Tx Power Update Limit |
|-----|---------|-----------------------|
| B | -75dBm | Least MyBSS RSSI - (-82) |
| C | -65dBm | = (-72+82) = 7dBm |

Table stored at STA-A

# Fig. 5

EP 3 297 340 A2

```
┌─────────────────────────┐          ┌─────────────────────────┐
│ Collect RSSI values for │          │ Receive and store       │
│ each node in network    │          │ smallest RSSI values    │
│                         │          │ for each node in network│
└─────────────────────────┘          └─────────────────────────┘
            │                                    │
            ▼        202                         ▼        212
┌─────────────────────────┐          ┌─────────────────────────┐
│ Determine smallest RSSI │          │ Determine limit for     │
│ value within network    │          │ each node               │
└─────────────────────────┘          └─────────────────────────┘
            │                                    │
            ▼        204                         ▼        214
┌─────────────────────────┐          ┌─────────────────────────┐
│ Determine limit         │          │ Transmit limits to      │
│                         │          │ respective nodes        │
└─────────────────────────┘          └─────────────────────────┘
                 206                                   216
```

## Fig. 6(a)          Fig. 6(b)

```
                    ┌─────────────────────┐
                    │ Receive OBSS signal │
                    └─────────────────────┘
                              │
                              ▼         302
                           ◇ RSSI_OBSS
┌──────────────┐    no       >                yes
│ Mark channel │◄────────   OBSS_PD?    ───────────┐
│ as CLEAR     │            ◇                      │
└──────────────┘                 304               │
       306                                         │
                                                   ▼
                          ◇ OBSS_PD_D
┌──────────────┐   no        +limit           yes  ┌─────────────────────┐
│ Wait for end │◄────────      >      ────────────►│ Increase OBSS_PD    │
│ of OBSS      │            RSSI_OBSS?              │ and reduce transmit │
│ transmission │            ◇                       │ power               │
└──────────────┘                 308               └─────────────────────┘
       310                            312                    │
                                                             ▼
                                                 ┌─────────────────────┐
                                                 │ SR transmission     │
                                                 │ advertising new     │
                                                 │ transmit power      │
                                                 └─────────────────────┘
                                                        314
```

## Fig. 7

| | Least MyBSS RSSI | Tx Power Update Limit |
|---|---|---|
| STA-A | -75dBm | -75 - (-82) = 7dBm |
| STA-B | -75dBm | -75 - (-82) = 7dBm |
| STA-C | -70dBm | -70 - (-82) = 12dBm |

Table stored by the AP

Fig. 8

Rx RSSI = -72dBm
If (Tx Pow bit == 1){RSSI of STA-A@STA-C
at Ref Power = -72 + 15 - 8 = -65dBm}
else {RSSI of STA-A@STA-C at Ref
Power = -72 + 15 - 15 = -72dBm}

| | Tx Power Update Limit |
|---|---|
| STA-A | 7dBm |
| STA-B | 7dBm |
| STA-C | 12dBm |

Table advt. by
AP & cached
locally

Rx RSSI = -82dBm
If (Tx Pow bit == 1){RSSI of STA-A@STA-B
at Ref Power = -82 + 15 - 8 = -75dBm}
else {RSSI of STA-A@STA-B at Ref
Power = -82 + 15 - 15 = -82dBm}

| | Tx Power Update Limit |
|---|---|
| STA-A | 7dBm |
| STA-B | 7dBm |
| STA-C | 12dBm |

Table advt. by
AP & cached
locally

TxPow = 15-7 = 8dBm
OBSS PD = -82+7 = -75dBm
STA-A overcomes OBSS Tx

Neighbouring network

Scenario 2
RSSI = -78dBm

| | Tx Power Update Limit |
|---|---|
| STA-A | 7dBm |
| STA-B | 7dBm |
| STA-C | 12dBm |

Table advt. by
AP & cached
locally

SR Tx Tx Pow bit = 1

# Fig. 9

EP 3 297 340 A2

Fig. 10

Fig. 11

First phase

Second phase

Third phase

Collect RSSI values for each node in network
402

Determine smallest RSSI value within network
404

Determine limit
406

Advertise limit, default Tx power and current Tx power
408

Receive and store limits for other nodes in network
412

Determine smallest limit value
414

Update own limit value
416

Fig. 12

| STA | Rx RSSI | Tx Power adjustment limit to be advertised |
|-----|---------|--------------------------------------------|
| A | -60dBm | Least MyBSS RSSI - (-82) |
| B | -68dBm | = (-68+82) = 14dBm |

Table stored at STA-C

Ref Tx Pow = 19dBm

STA-C

RSSI = -68 dBm

RSSI = -66 dBm

AP1

RSSI = -60 dBm

RSSI = -64 dBm

STA-B

Ref Tx Pow = 15dBm

RSSI = -75 dBm

RSSI = -65 dBm

Cx

RSSI = -65 dBm

AP2

Neighbouring network

| STA | Rx RSSI | Tx Power adjustment limit to be advertised |
|-----|---------|--------------------------------------------|
| B | -65dBm | Least MyBSS RSSI - (-82) |
| C | -66dBm | = (-66+82) = 16dBm |

Table stored at STA-B

STA-A

Ref Tx Pow = 23dBm

| STA | Rx RSSI | Tx Power adjustment limit to be advertised |
|-----|---------|--------------------------------------------|
| B | -75dBm | Least MyBSS RSSI - (-82) |
| C | -64dBm | = (-75+82) = 7dBm |

Table stored at STA-A

Fig. 13

Tx. Power Adjustment limit =
min (7,16) = 7dBm

STA-C

| 15dBm | 15dBm | 15dBm | 14dBm |
| 19dBm | 19dBm | 14dBm |

| 23dBm | 23dBm | 7dBm |
| 19dBm | 19dBm | 14dBm |

AP1

STA-B

Tx. Power Adjustment limit =
min (7,14) = 7dBm

| 15dBm | 15dBm | 16dBm |
| 23dBm | 23dBm | 7dBm |

STA-A

RSSI = -65 dBm

Cx

AP2

Neighbouring network

Tx. Power Adjustment limit =
min (14,16) = 14dBm

Fig. 14

Fig. 15

Rx RSSI = -74dBm
RSSI of STA-A@STA-C at Ref Power = RxRSSI (-74) + Ref. Tx
power of STA-A (23) - current Tx power of STA-A (9)
= -74 + 23 - 9 = -60dBm

Rx RSSI = -79dBm
RSSI of STA-A@STA-B at Ref Power = RxRSSI (-79) + Ref. Tx
power of STA-A (23) - current Tx power of STA-A (9)
= -79 + 23 - 9 = -65dBm

STA-C

AP1

STA-B

Cx

AP2

| 23dBm | 9dBm | 7dBm |
Spatial Reuse Transmission

OBSS Transmission
RSSI = -70 dBm

STA-A

Neighbouring network

Fig. 16

STA-C
R = min(-70,-55,-65) = -70dBm
Limit = -70 - (-82) = 12dBm

STA-B
R = min(-70,-65,-75) = -75dBm
Limit = -75 - (-82) = 7dBm

AP1
R = min(-65,-55,-60) = -65dBm
Limit = -65 - (-82) = 17dBm

RSSI = -70dBm

RSSI = -55dBm

RSSI = -65dBm

RSSI = -65dBm

RSSI = -60dBm

RSSI = -75dBm

STA-A
R = min(-75,-60,-65) = -75dBm
Limit = -75 - (-82) = 7dBm

Fig. 17

**Only STA-C associated with AP**

STA-C
T=19dBm, I = -55dBm, SRP = T + I = 19 + (-55) = -36dBm
R = -55dBm, Limit = -55 - (-82) = 27dBm

RSSI = -55dBm

STA-C

AP1
AP1
R = -55dBm
Limit = -55 - (-82) = 27dBm

**STA-A arrives and associates with AP**
**STA-A and STA-C overhear each other**

STA-C
T = 19dBm, I = -55dBm,
SRP = T + I = 19 + (-55)
= -36dBm
R = min(-55,-65)
= -65dBm,
Limit = -65 - (-82)
= 17dBm

RSSI = -55dBm

AP1
AP1
R = min(-55,-60) = -60dBm
Limit = -60 - (-82) = 22dBm

RSSI = -60dBm

RSSI = -65dBm

STA-A
STA-A
T=19dBm, I = -60dBm, SRP = T + I = 19 + (-60) = -41dBm
R = min(-60,-65) = -65dBm, Limit = -65 - (-82) = 17dBm

**STA-B arrives and associates with AP**
**STA-A,STA-B and STA-C overhear each other**

STA-C
T=19dBm, I = -55dBm, SRP = T + I = 19 + (-55) = -36dBm
R = min(-70,-55,-65) = -70dBm, Limit = -70 - (-82) = 12dBm

STA-C

RSSI = -70dBm

RSSI = -55dBm

RSSI = -65dBm

AP1
R = min(-55,-60,-65) = -65dBm
Limit = -65 - (-82) = 17dBm

STA-B
RSSI = -65dBm
AP1

RSSI = -60dBm

STA-B
T = 19dBm, I = -65dBm,
SRP = T + I = 19 + (-65) = -46dBm
R = min(-75,-65,-70)= -75dBm
Limit = -75 - (-82) = 7dBm

RSSI = -75dBm

STA-A
STA-A
T=19dBm, I = -60dBm, SRP = T + I = 19 + (-60) = -41dBm
R = min(-75,-60,-65) = -75dBm, Limit = -75 - (-82) = 7dBm

# Fig. 18

Table at the STA-C

| Link | SRP (recorded) | RSSI (recorded) |
|------|------|------|
| AP->STA-A | -37dBm | -55dBm |
| AP->STA-B | -42dBm | -55dBm |
| AP->STA-C | -32dBm | -55dBm |
| STA-A->AP | -41dBm | -65dBm |
| STA-B->AP | -46dBm | -70dBm |

Table at the AP

| Link | SRP (recorded) | RSSI (recorded) |
|------|------|------|
| STA-A->AP | -41dBm | -60dBm |
| STA-B->AP | -46dBm | -65dBm |
| STA-C->AP | -36dBm | -55dBm |

STA-C

STA-B

AP1

| Link | SRP (recorded) | RSSI (recorded) |
|------|------|------|
| AP->STA-A | -37dBm | -65dBm |
| AP->STA-B | -42dBm | -65dBm |
| AP->STA-C | -32dBm | -65dBm |
| STA-A->AP | -41dBm | -75dBm |
| STA-C->AP | -36dBm | -70dBm |

Table at the STA-B

Cx

AP2

OBSS Transmission
RSSI = -71 dBm

STA-A (Limit = 7dBm)

STA-A

To overcome OBSS Tx and simultaneously engage in an SR transmission
STA-A needs to increase its OBSS_PD threshold by (-71 -(-82) + 1) =
12dBm & reduce Tx power by the same amount.
However, since the Limit is 7dBm, STA-A will not engage in an SR
Transmission

Fig. 19

**Table at the STA-C**

| Link | SRP (recorded) | RSSI (recorded) |
|---|---|---|
| AP->STA-A | -37dBm | -55dBm |
| AP->STA-B | -42dBm | -55dBm |
| AP->STA-C | -32dBm | -55dBm |
| STA-A->AP | -41dBm | -65dBm |
| STA-B->AP | -46dBm | -70dBm |

**Table at the AP**

| Link | SRP (recorded) | RSSI (recorded) |
|---|---|---|
| STA-A->AP | -41dBm | -60dBm |
| STA-B->AP | -46dBm | -65dBm |
| STA-C->AP | -36dBm | -55dBm |

Overheard SR Tx with SRP = -46 (< cached value), also RSSI measured < cached value, so no table update (STA-B)

Received SR Tx and ACKed (SRP<cached value, RSSI < cached value, no table update) AP1

STA-C

Overheard SR Tx with SRP = -46 (< cached value), also RSSI measured < cached value, so no table update

Cx

AP2

SR Tx to AP SRP = -46dBm

OBSS Transmission RSSI = -78 dBm

STA-A

**Table at the STA-B**

| Link | SRP (recorded) | RSSI (recorded) |
|---|---|---|
| AP->STA-A | -37dBm | -65dBm |
| AP->STA-B | -42dBm | -65dBm |
| AP->STA-C | -32dBm | -65dBm |
| STA-A->AP | -41dBm | -75dBm |
| STA-C->AP | -36dBm | -70dBm |

STA-A (Limit = 7dBm), SRP for the SR Tx = -41 - 5 = -46dBm

OBSS RSSI - Default OBSS_PD threshold = -78 - (-82) = 4dBm (< STA-A Limit of 7dBm). To overcome OBSS Tx, STA-A reduces Tx Power and increases OBSS_PD both by 5dBm and engages in SR transmission (can still be heard at other MyBSS nodes).

# Fig. 20

Associate with
access point (AP)

~452

Store RSSI of signals in
network and SRP with AP

~454

Determine limit based
on least myBSS RSSI

~456

Communicate with AP,
including SRP in header

~458

Overhear communication
from other node in network

~462

Determine
transmission
to be SR
transmission

~466

no ← SRP
>
stored SRP → yes

~464

Update
stored RSSI &
SRP for given
node

~468

Update
limit

~474

yes ← New
least myBSS
RSSI? → no

~470

Maintain
limit

472

Fig. 21

500    510

520 — Controller

522 — CCA module

Wireless Network Interface

515

Memory — 530

## Fig. 22(a)

620    600    610

Controller

622 — CCA module

Wireless Network Interface

615

Wireless Network Interface

Memory — 630

640

## Fig. 22(b)